# FASCICULE DE BREVET EUROPEEN

(11) **EP 1 359 653 B1**
(45) Date de publication et mention de la délivrance du brevet: **22.03.2017**
(21) Numéro de dépôt: 03291042.4
(22) Date de dépôt: 29.04.2003
(51) Int. Cl.: H02G 3/04, F16L 3/26

(54) **Elément constitutif d'une goulotte avec agrafes de retenue de câbles intégrées et goulotte comprenant un ou plusieurs éléments constitutifs de ce type**
Leitungsführungskanal mit integrierten Heftklammern zum Halten von Kabeln und Leitungsführungskanal einschließlich einem oder mehrerer Bestandteile dieser Art
Cable duct with integrated staples for retaining cables and cable duct including one or more components of this type

(30) Priorité: 30.04.2002 FR 0205441
(43) Date de publication de la demande: 05.11.2003
(73) Titulaire: PLANET-WATTOHM, 60300 Senlis (FR)
(72) Inventeur: Popescu, Dragos, 93110 Rosny-sous-Bois (FR); Marcou, Jean-Claude, 87000 Limoges (FR)
(74) Mandataire: Santarelli

(56) Documents cités:
- EP-A- 0 742 625
- EP-A- 1 065 770

## Description

La présente invention concerne de manière générale les goulottes de cheminement de câbles ou de conducteurs électriques.

Elle concerne plus particulièrement un socle de goulotte intégrant au moins une agrafe de retenue de câbles électriques détachable qui vient de formation avec ledit socle de goulotte.

Elle concerne également un élément de fermeture à rapporter sur un socle de goulotte pour fermer l'ouverture longitudinale définie entre ses ailes latérales, et un élément d'habillage à rapporter sur un tel socle.

Enfin, elle concerne une goulotte de cheminement de câbles ou de conducteurs électriques comportant un socle, un élément de fermeture et/ou un élément d'habillage.

On connaît déjà du document EP 0 742 625 un socle de goulotte, tel que défini en introduction qui comporte, dans le fond ou l'une de ses ailes latérales, une zone pré-emboutie de façon à former une agrafe de retenue détachable.

Toutefois, un tel socle de goulotte présente comme principal inconvénient le fait que le détachement d'une agrafe de retenue du socle engendre une altération de ce socle en laissant un trou dans son fond ou l'une de ses ailes latérales. Ainsi, après avoir détaché l'agrafe dudit socle, celui-ci n'est plus étanche.

Afin de remédier à cet inconvénient, l'invention propose un nouveau socle de goulotte intégrant une agrafe de retenue de câbles détachable, qui vient de formation avec celui-ci, caractérisé en ce que ladite agrafe de retenue fait saillie d'une partie dudit socle de goulotte en étant rattachée à cette partie par un lien frangible.

En cassant le lien frangible reliant l'agrafe de retenue au socle de goulotte selon la présente invention, on peut alors détacher facilement ladite agrafe de retenue, sans modifier en quoi que ce soit le socle de goulotte lui-même. De cette manière, on garde une étanchéité parfaite au niveau du socle.

En quelque sorte, l'agrafe de retenue est une partie supplémentaire par rapport aux différentes parties, à savoir le fond, les ailes latérales, les retours d'aile et/ou les cloisons du socle de goulotte.

En outre, avantageusement, le socle de goulotte comportant les agrafes intégrées permet d'éviter qu'un installateur perde les agrafes de retenue lors de la mise en place du socle.

Avantageusement, l'installateur peut poser le socle de goulotte selon l'invention puis détacher, si besoin est, les agrafes de retenue à positionner au travers de l'ouverture longitudinale de ce socle pour éviter la sortie des câbles ou des conducteurs électriques circulant dans ce socle pendant la phase de câblage et/ou lors de l'ouverture ultérieure du couvercle de fermeture rapporté sur celui-ci.

S'il n'utilise pas toutes les agrafes de retenue intégrées au socle de goulotte, les agrafes de retenue non utilisées restent rattachées à ce dernier sans gêner en quoi que ce soit la mise en place des câbles ou conducteurs électriques dans ledit socle de goulotte.

D'autres caractéristiques non limitatives et avantageuses du socle de goulotte selon l'invention sont les suivantes :
- chaque agrafe de retenue détachable est située à l'intérieur dudit socle ;
- chaque agrafe de retenue détachable est rattachée à une aile latérale du socle et s'étend selon l'axe longitudinal dudit socle ;
- chaque agrafe de retenue détachable est située à proximité d'un bord d'extrémité libre de cette aile latérale ;
- chaque agrafe de retenue est rattachée à un retour d'aile dirigé vers l'autre aile latérale dudit socle ;
- une aile latérale porte, en équerre, sur sa face intérieure, une pluralité d'agrafes de retenue détachables qui s'étendent selon l'axe longitudinal dudit socle en étant espacées les une des autres ;
- les deux ailes latérales dudit socle portent, en équerre, sur leur face intérieure, une pluralité d'agrafes de retenue détachables qui s'étendent selon l'axe longitudinal dudit socle en étant espacées les une des autres ;
- lesdites agrafes de retenue sont régulièrement espacées les unes des autres ;
- chaque agrafe de retenue détachable est rattachée à une cloison solidaire du fond du socle pour former plusieurs compartiments à l'intérieur de ce dernier ;
- chaque agrafe de retenue détachable est positionnée en équerre sur une face de ladite cloison, à proximité du bord d'extrémité libre de ladite cloison, et s'étend selon l'axe longitudinal dudit socle ;
- ladite cloison porte, en équerre, sur une de ses faces, une pluralité d'agrafes de retenue détachables qui s'étendent selon l'axe longitudinal dudit socle en étant espacées les unes des autres ;
- ladite cloison porte, en équerre, sur ses deux faces, une pluralité d'agrafes de retenue détachables qui s'étendent selon l'axe longitudinal dudit socle en étant espacées les unes des autres ;
- la cloison vient de formation avec le socle ;
- la cloison est rapportée sur le fond du socle ;
- une aile latérale et/ou une cloison porte(nt), en équerre, sur sa (leur) face tournée vers l'autre aile latérale, au moins un crochet pour le montage de ladite agrafe de retenue détachable, ladite agrafe de retenue comportant à une extrémité une fente pour l'engagement sur ledit crochet ;
- ladite aile latérale et/ou ladite cloison porte(nt), en équerre, sur sa (leur) face tournée vers l'autre aile latérale, une pluralité de crochets pour le montage d'une pluralité d'agrafes de retenue détachables, chaque agrafe de retenue comportant à une extrémité une fente pour l'engagement sur un crochet ;
- chaque agrafe de retenue détachable présente une longueur telle que l'extrémité opposée à celle comportant ladite fente est apte à s'engager sous un retour de l'autre aile latérale ou d'une cloison exempte de crochet ;
- les deux ailes latérales portent, en équerre, sur leur face tournée vers l'autre aile latérale, une pluralité de crochets pour le montage d'une pluralité d'agrafes de retenue détachables, chaque agrafe de retenue comportant, à chacune de ses extrémités opposées, une fente pour l'engagement sur un crochet ;
- lesdits crochets sont alternés avec des agrafes de retenue détachables ;
- les crochets portés par une aile latérale et/ou une cloison sont orientés dans le même sens ;
- les crochets portés par une aile latérale et/ou une cloison sont alternativement orientés dans des sens opposés ;
- chaque agrafe de retenue détachable comporte un moyen de pivotement apte à coopérer avec un moyen de pivotement complémentaire prévu sur chaque crochet lorsque l'agrafe de retenue est introduite par sa fente sur ledit crochet, pour autoriser un pivotement de l'agrafe de retenue sur ledit crochet entre une première position extrême dans laquelle l'agrafe de retenue s'étend le long d'une aile latérale ou d'une cloison dudit socle et une deuxième position extrême dans laquelle l'agrafe de retenue s'étend au travers de l'ouverture longitudinale dudit socle ou d'un compartiment de celui-ci ;
- ledit moyen de pivotement prévu sur chaque agrafe de retenue détachable est un téton et ledit moyen de pivotement complémentaire prévu sur chaque crochet est un renfoncement ou un trou accueillant ledit téton ;
- chaque crochet comporte une dent de retenue de chaque agrafe de retenue engagée par sa fente sur ledit crochet ;
- chaque crochet vient de formation avec l'aile latérale ou la cloison qui le porte ;
- il est prévu, sur le bord d'extrémité libre des crochets, des moyens de montage d'un couvercle de fermeture du socle ;
- le socle comporte un fond bordé par deux parois latérales parallèles différentes, à savoir, d'une part, une paroi latérale portant, en équerre, sur sa face tournée vers l'autre aile latérale, un retour intérieur et une gorge longitudinale courant sous le retour intérieur, bordée par un bourrelet, et, d'autre part, une paroi latérale portant, en équerre, sur sa face tournée vers l'autre aile latérale, un retour intérieur simple et chaque agrafe de retenue portant, au moins à une extrémité, deux pions faisant saillie d'une face de l'agrafe de retenue tournée vers l'intérieur du socle, ledit bourrelet étant destiné à l'accrochage des deux pions de chaque agrafe de retenue et ledit retour intérieur simple étant adapté au positionnement et à l'appui de l'extrémité de chaque agrafe de retenue opposée à celle portant lesdits pions ;
- chaque agrafe de retenue porte, à chacune de ses deux extrémités, deux pions faisant saillie de la face de l'agrafe de retenue tournée vers l'intérieur du socle ;
- chaque agrafe de retenue porte, sur sa face tournée vers l'intérieur du socle, six pions, une paire de pions à chaque extrémité et une paire de pions située en partie médiane ; et
- chaque agrafe de retenue porte, sur sa face tournée vers l'intérieur du socle, au moins une nervure longitudinale.

L'invention concerne également un élément de fermeture à rapporter sur un socle de goulotte pour fermer l'ouverture longitudinale définie entre ses ailes latérales, qui intègre au moins une agrafe de retenue de câbles électriques détachable, qui vient de formation avec ledit élément de fermeture en faisant saillie d'une partie de ce dernier et en étant rattachée à cette partie par un lien frangible.

Avantageusement, un tel élément de fermeture peut comporter une pluralité d'agrafes de retenue détachables espacées les unes des autres selon la direction longitudinale dudit élément de fermeture.

Selon un mode de réalisation de l'élément de fermeture conforme à l'invention, chaque agrafe de retenue est rattachée à la face intérieure de la paroi de fermeture dudit élément de fermeture.

Selon un autre mode de réalisation de l'élément de fermeture conforme à l'invention, chaque agrafe de retenue détachable est rattachée à un bord extérieur de l'élément de fermeture.

L'invention concerne également un élément d'habillage à rapporter sur un socle de goulotte qui intègre au moins une agrafe de retenue de câbles électriques détachable qui vient de formation avec ledit élément d'habillage en faisant saillie d'une partie de ce dernier et en étant rattachée à cette partie par un lien frangible.

Selon une caractéristique avantageuse de l'élément d'habillage conforme à l'invention, il comporte une pluralité d'agrafes de retenue détachables espacées les unes des autres selon la direction longitudinale dudit élément d'habillage.

Ainsi, tout comme pour le socle de goulotte conforme à l'invention, en cassant le lien frangible reliant l'agrafe de retenue à l'élément de fermeture ou à l'élément d'habillage à rapporter sur un socle de goulotte, l'installateur peut facilement détacher ladite agrafe de retenue, sans modifier en quoi que ce soit ledit élément de fermeture ou ledit élément d'habillage lui-même. De cette manière, on maintient l'intégrité d'un tel élément.

En quelque sorte, l'agrafe de retenue est également une partie supplémentaire par rapport aux différentes parties de l'élément de fermeture ou de l'élément d'habillage.

En tant qu'élément d'habillage, on peut citer un couvercle latéral à rapporter sur le socle de goulotte ou encore un joint de sol.

Plus généralement, la présente invention concerne un élément constitutif ou de construction d'une goulotte, tel qu'un socle, un élément de fermeture ou un élément d'habillage, qui intègre une ou plusieurs agrafes de retenue de câbles électriques détachables, cette agrafe de retenue venant de formation avec ledit élément constitutif ou de construction, et faisant saillie d'une partie de cet élément en étant rattachées à celle-ci par un lien frangible.

Selon l'invention, chaque agrafe de retenue doit constituer une partie supplémentaire par rapport aux différentes parties de l'élément constitutif ou de construction de la goulotte.

Enfin, l'invention concerne une goulotte de cheminement de câbles ou de conducteurs électriques comprenant un socle, un élément de fermeture tel que précité, et/ou un élément d'habillage tel que précité, ledit socle comprenant une aile latérale et/ou une cloison qui porte(nt), en équerre, sur sa (leur) face tournée vers l'autre aile latérale, au moins un crochet pour le montage d'une agrafe de retenue détachable, ladite agrafe de retenue comportant, à une extrémité, une fente pour l'engagement sur ledit crochet.

Selon des caractéristiques avantageuses et non limitatives de la goulotte de cheminement de câbles ou de conducteurs électriques précitée :
- ladite aile latérale et/ou ladite cloison dudit socle porte(nt), en équerre, sur sa (leur) face tournée vers l'autre aile latérale, une pluralité de crochets pour le montage d'une pluralité d'agrafes de retenue détachables, chaque agrafe de retenue comportant à une extrémité une fente pour l'engagement sur un crochet ;
- chaque agrafe de retenue détachable présente une longueur telle que l'extrémité opposée à celle comportant ladite fente est apte à s'engager sous un retour de l'autre aile latérale ou d'une cloison exempte de crochet dudit socle ;
- les deux ailes latérales portent, en équerre, sur leur face tournée vers l'autre aile latérale, une pluralité de crochets pour le montage d'une pluralité d'agrafes de retenue détachables, chaque agrafe de retenue comportant, à chacune de ses extrémités opposées, une fente pour l'engagement sur un crochet ;
- lesdits crochets sont alternés avec des agrafes de retenue détachables ;
- les crochets portés par une aile latérale et/ou une cloison sont orientés dans le même sens ;
- les crochets portés par une aile latérale et/ou une cloison sont alternativement orientés dans des sens opposés ;
- chaque agrafe de retenue détachable comporte un moyen de pivotement apte à coopérer avec un moyen de pivotement complémentaire prévu sur chaque crochet lorsque l'agrafe de retenue est introduite par sa fente sur ledit crochet, pour autoriser un pivotement de l'agrafe de retenue sur ledit crochet entre une première position extrême dans laquelle l'agrafe de retenue s'étend le long d'une aile latérale ou d'une cloison dudit socle et une deuxième position extrême dans laquelle l'agrafe de retenue s'étend au travers de l'ouverture longitudinale dudit socle ou d'un compartiment de celui-ci ;
- ledit moyen de pivotement prévu sur chaque agrafe de retenue détachable est un téton et ledit moyen de pivotement complémentaire prévu sur chaque crochet est un renfoncement ou un trou accueillant ledit téton ;
- chaque crochet comporte une dent de retenue de chaque agrafe de retenue engagée par sa fente sur ledit crochet ;
- chaque crochet vient de formation avec l'aile latérale ou la cloison qui le porte ; et
- il est prévu, sur le bord d'extrémité libre des crochets, des moyens de montage d'un couvercle de fermeture du socle.

Selon un mode de réalisation particulier de la goulotte de cheminement de câbles ou de conducteurs électriques selon l'invention, celle-ci peut comporter un socle selon l'invention et/ou un élément de fermeture selon l'invention et/ou un élément d'habillage selon l'invention.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un premier mode de réalisation d'un socle de goulotte selon l'invention ;
- la figure 2 est une vue de dessus du socle de goulotte de la figure 1 ;
- la figure 3 est une vue en bout du socle de goulotte de la figure 2 ;
- la figure 4 est une vue en perspective du socle de goulotte de la figure 1 montrant l'étape de mise en place sur le socle de l'agrafe de retenue détachée du socle ;
- la figure 5 est une vue en plan du socle de la figure 1 avec une agrafe de retenue mise en place au travers de l'ouverture longitudinale de ce socle ;
- la figure 6 est une vue en bout du socle de goulotte de la figure 5 ;
- la figure 7 est une vue schématique en perspective d'un deuxième mode de réalisation du socle de goulotte selon l'invention ;
- la figure 8 est une vue en bout du socle de goulotte de la figure 7 ;
- la figure 9 est une vue schématique en perspective du socle de goulotte de la figure 7 montrant la mise en place sur le socle d'une agrafe de retenue détachée de ce socle ;
- la figure 10 est une vue partielle en plan du socle de la figure 7 avec une agrafe de retenue mise en place au travers de l'ouverture longitudinale de ce socle ;
- la figure 11 est une vue en coupe selon le plan XI-XI du socle de la figure 10 ;
- la figure 12 est une vue schématique en plan d'un troisième mode de réalisation du socle de goulotte selon l'invention;
- la figure 13 est une vue en bout du socle de goulotte de la figure 12 ;
- la figure 14 est une vue schématique en perspective d'un quatrième mode de réalisation du socle de goulotte selon l'invention ;
- la figure 15 est une vue schématique en perspective d'un cinquième mode de réalisation du socle de goulotte selon l'invention;
- la figure 16 est une vue schématique en perspective du socle de goulotte de la figure 15 avec la mise en place sur le socle d'une agrafe de retenue détachée de ce socle ;
- la figure 17 est une vue schématique en perspective du socle de goulotte de la figure 15 avec l'agrafe de retenue mise en place sur ce socle ;
- la figure 18A est une vue schématique en perspective d'un premier mode de réalisation d'un élément de fermeture selon l'invention ;
- la figure 18B est un deuxième mode de réalisation de l'élément de fermeture conforme à l'invention ;
- la figure 19A est une vue en bout d'un sixième mode de réalisation du socle selon l'invention, avec une agrafe détachée du socle et positionnée en position d'attente ;
- la figure 19B est une vue en bout du socle de la figure 19A, avec l'agrafe détachée du socle et positionnée en travers de l'ouverture longitudinale dudit socle ; et
- la figure 20 est une vue de dessus du socle de la figure 19A.

En préliminaire, on notera que les éléments identiques ou similaires des différents modes de réalisation de l'invention représentés sur les différentes figures seront, dans la mesure du possible, référencés par les mêmes signes de référence et ne seront pas décrits à chaque fois.

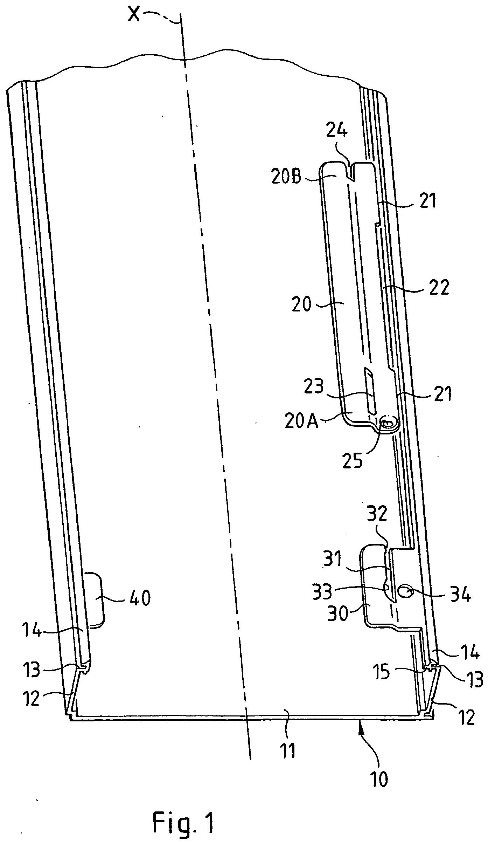

Sur les figures 1 à 3, on a représenté un socle de goulotte 10 qui présente un fond 11 à partir duquel s'élèvent deux ailes latérales 12.

Ici, les ailes latérales 12 du socle de goulotte 10 sont perpendiculaires au fond 11 de ce dernier de telle sorte que le socle de goulotte 10 présente une section globalement en U.

Bien entendu, selon une variante non représentée, on peut prévoir que le socle de goulotte 10 présente une section en V avec des ailes latérales s'étendant selon des directions divergentes l'une par rapport à l'autre.

Les ailes latérales 12 du socle de goulotte 10 viennent de formation avec son fond 11 mais, selon une variante non représentée, on pourrait également prévoir qu'elles soient rapportées sur celui-ci.

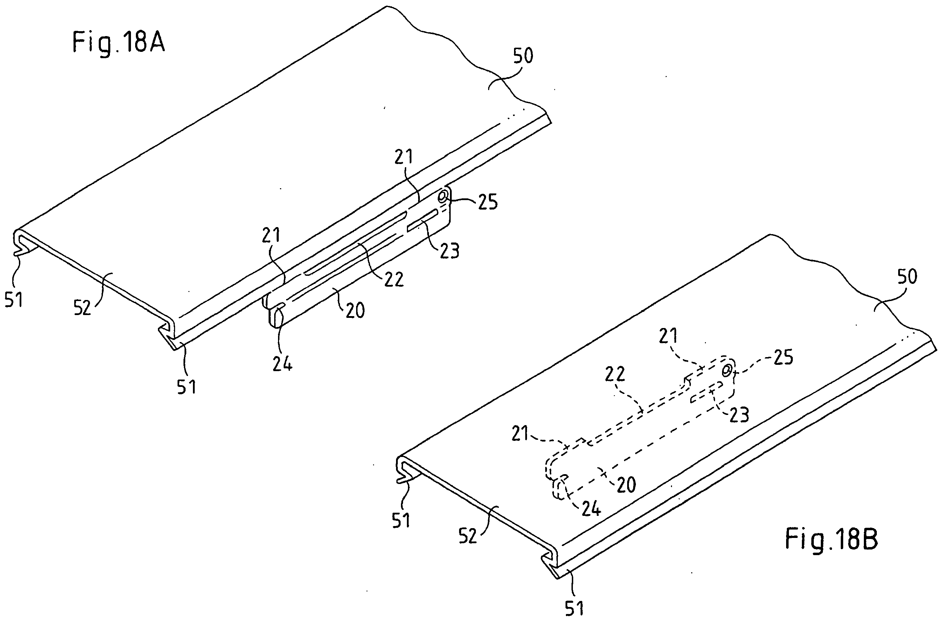

Chaque aile latérale 12 comprend, à proximité de son bord d'extrémité libre, sur sa face extérieure, une rainure longitudinale 13 surmontée par un bourrelet d'encliquetage 14 permettant le montage d'un élément de fermeture 50 (voir figures 18A et 18B).

En outre, une des deux ailes latérales 12 comporte, sur sa face intérieure, à proximité de son bord d'extrémité libre, un retour 15 en équerre dirigé vers l'autre aile latérale 12 et qui court sur la longueur de ladite aile. L'autre aile latérale 12 est exempte d'un tel retour 15 longitudinal.

Avantageusement, et c'est plus particulièrement l'objet de l'invention, ce socle de goulotte 10 intègre au moins une agrafe de retenue 20 de câbles électriques qui est détachable et qui vient de formation avec ledit socle de goulotte 10.

Chaque agrafe de retenue 20 fait saillie d'une partie 12 de ce socle de goulotte 10 en étant rattachée à cette partie 12 par un lien frangible 21.

Selon le mode de réalisation représenté, chaque agrafe de retenue 20 détachable est située à l'intérieur du socle de goulotte 10 et est ici rattachée à une aile latérale 12 de ce socle, en s'étendant selon l'axe longitudinal X dudit socle.

Comme le montre plus particulièrement la figure 1, chaque agrafe de retenue 20 détachable est située à proximité du bord d'extrémité libre portant le bourrelet d'encliquetage 14 de cette aile latérale 12, en formant en quelque sorte un retour en équerre de ladite aile latérale 12, dirigé vers l'autre aile latérale 12 du socle de goulotte 10.

Bien entendu, l'aile latérale 12 du socle de goulotte 10 représenté sur les figures 1 à 3 peut porter, en équerre, sur sa face intérieure dirigée vers l'autre aile latérale 12, une pluralité d'agrafes de retenue 20 détachables qui s'étendent selon l'axe longitudinal X dudit socle en étant espacées les unes des autres. L'espacement entre les agrafes de retenue 20 peut être régulier.

En outre, le socle de goulotte 10 représenté sur les figures 1 à 3 comporte, associé à chaque agrafe de retenue 20, un crochet 30 pour le montage de ladite agrafe de retenue 20 après l'avoir détachée du socle. Ici, chaque crochet 30 est rattaché au retour 15 de l'aile latérale 12 correspondante et s'étend perpendiculairement à celle-ci en direction de l'autre aile latérale 12 du socle de goulotte 10.

Chaque crochet 30 comporte une fente 31 d'engagement de l'agrafe de retenue 20 correspondante, qui est définie entre les deux parties du crochet 30. Cette fente 31 comporte, à proximité de son embouchure, une dent de retenue 32 de chaque agrafe de retenue 20 engagée sur ledit crochet 30. Au fond de ladite fente 31, chaque crochet 30 comporte une portion élargie arrondie 33 permettant le calage de l'agrafe de retenue 20 engagée dans le crochet 30 et positionnée au travers de l'ouverture longitudinale définie entre les ailes latérales 12 du socle de goulotte 10.

Chaque agrafe de retenue 20, portée par le socle de goulotte 10 représenté sur les figures 1 à 3, comporte à une extrémité 20A une fente 23 traversante permettant l'engagement sur le crochet 30 correspondant.

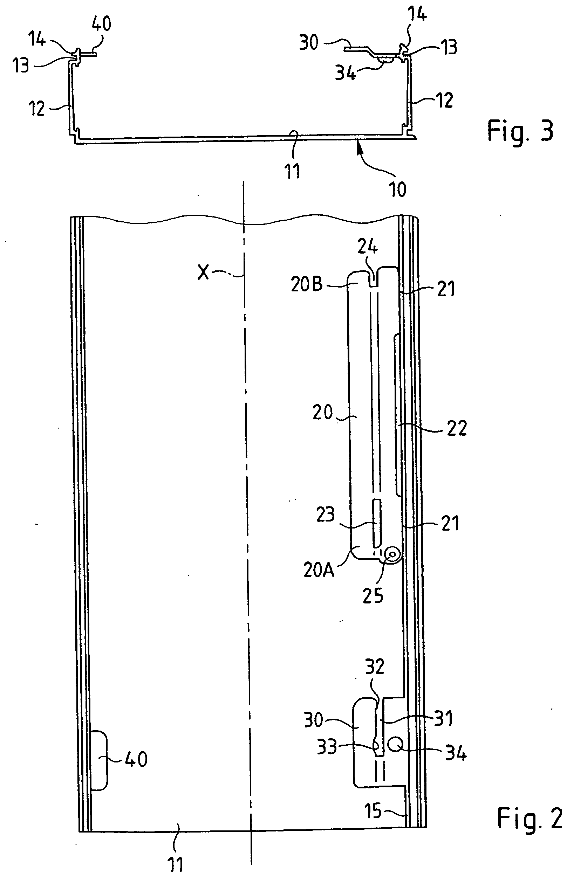

En outre, comme le montrent plus particulièrement les figures 1 et 2, chaque agrafe de retenue 20 détachable comporte un moyen de pivotement 25 apte à coopérer avec un moyen de pivotement complémentaire prévu sur chaque crochet 30.

Ici, le moyen de pivotement prévu sur chaque agrafe de retenue 20 est un téton 25 qui fait saillie de la face arrière de celle-ci, et le moyen de pivotement complémentaire prévu sur chaque crochet 30 est un renfoncement 34 formé sur la face avant de celui-ci et accueillant ledit téton 25. Bien entendu, on peut prévoir que le moyen de pivotement complémentaire prévu sur le crochet 30 soit un simple trou traversant.

En correspondance avec chaque crochet 30, l'autre aile latérale 12 du socle de goulotte 10 porte, sur sa face intérieure, à proximité de son bord d'extrémité libre portant le bourrelet d'encliquetage 14, une plaquette 40 formant un retour en équerre.

Cette plaquette 40 permet de maintenir l'agrafe de retenue 20, engagée par sa fente 23 sur le crochet 30, dans une position de travail dans laquelle elle s'étend au travers de l'ouverture longitudinale du socle de goulotte 10, c'est-à-dire transversalement à l'axe longitudinal X de ce dernier.

L'agrafe de retenue 20 comporte, à son extrémité 20B opposée à celle portant la fente 23, une fente 24 de plus courte longueur débouchant sur le bord de l'agrafe de retenue et destinée à venir s'engager sur la plaquette 40 formant ledit retour en équerre de l'autre aile latérale 12.

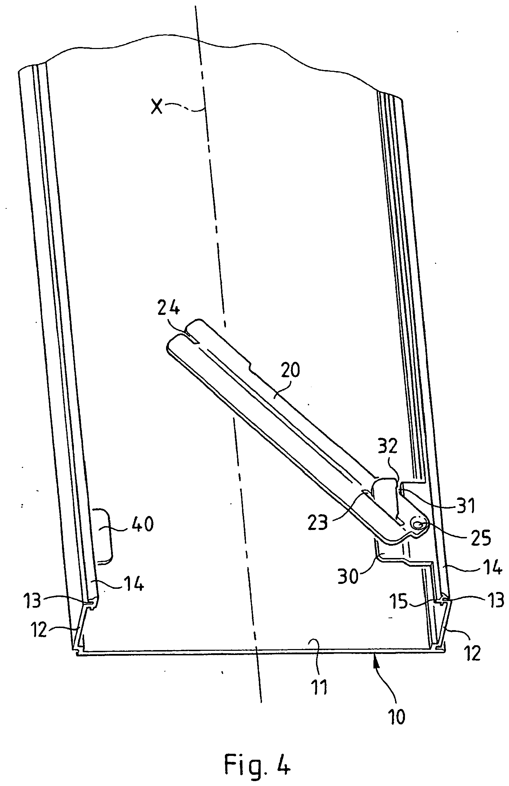

Les figures 4 à 6 montrent, plus particulièrement, la mise en place de l'agrafe de retenue 20 sur le socle de goulotte 10.

L'installateur détache l'agrafe de retenue 20 en cassant le lien frangible 21 la reliant à l'aile latérale 12 correspondante du socle de goulotte 10, puis engage la fente 23 de l'agrafe de retenue 20 dans la fente 31 du crochet 30 correspondant (voir figure 4).

Dans cette position, l'agrafe de retenue 20 s'étend selon une direction formant un angle aigu avec l'axe longitudinal X du socle de goulotte 10, et est retenue sur le crochet 30 par l'intermédiaire de la dent de retenue 32 qui prend appui sur un bord longitudinal de l'agrafe de retenue 20. Cette position permet un chargement aisé des câbles et/ou conducteurs électriques en assurant la retenue de ceux-ci.

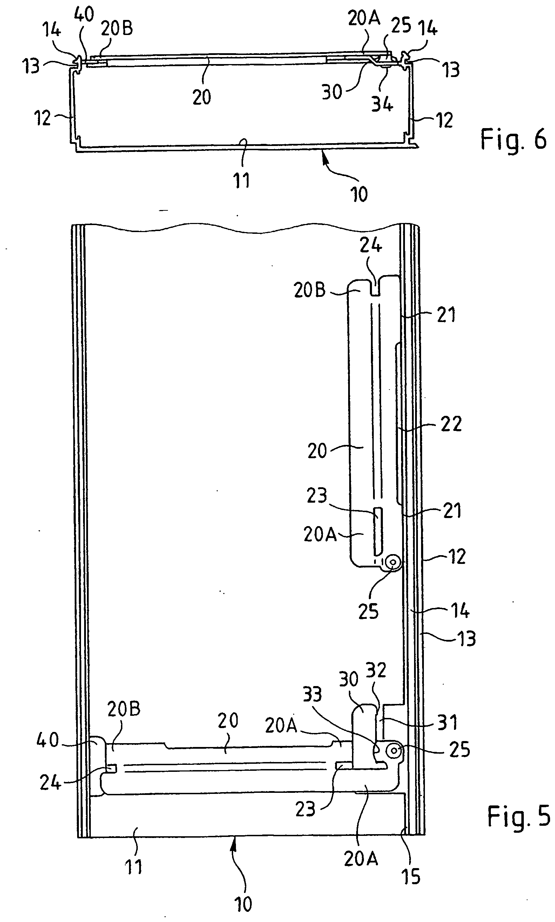

Le téton 25 de l'agrafe de retenue 20 est engagé dans le renfoncement 34 correspondant du crochet 30 de sorte que l'agrafe de retenue 20 peut pivoter entre une première position extrême dans laquelle elle s'étend le long de l'aile latérale 12 du socle de goulotte et une deuxième position extrême correspondant à la position de travail, représentée sur la figure 5, dans laquelle elle s'étend transversalement à l'axe longitudinal X du socle de goulotte au travers de l'ouverture longitudinale dudit socle. Entre, ces deux positions extrêmes, l'agrafe de retenue 20 peut prendre une position intermédiaire représentée sur la figure 4 autorisant le chargement en câbles du socle de goulotte 10.

En faisant pivoter l'agrafe de retenue 20 depuis sa position représentée sur la figure 4 vers la plaquette 40 portée par l'autre aile latérale 12, l'installateur positionne, progressivement en fonction du remplissage du socle de goulotte, l'agrafe de retenue 20 dans sa position de travail, représentée sur la figure 5, dans laquelle la fente 24 de l'agrafe de retenue 20 s'engage sur la plaquette 40. Dans cette position, l'agrafe de retenue 20 est calée dans la portion élargie arrondie 33 de la fente 31 du crochet 30.

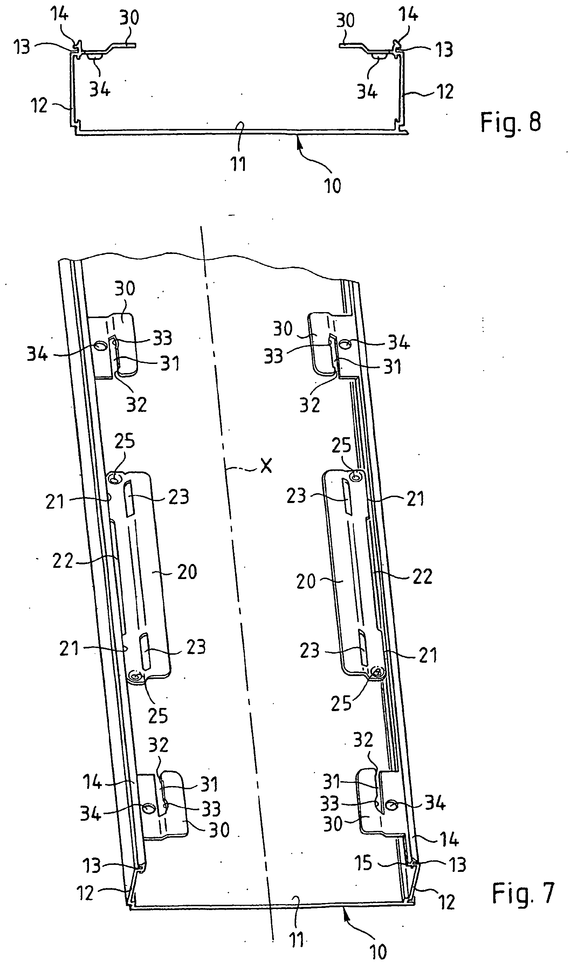

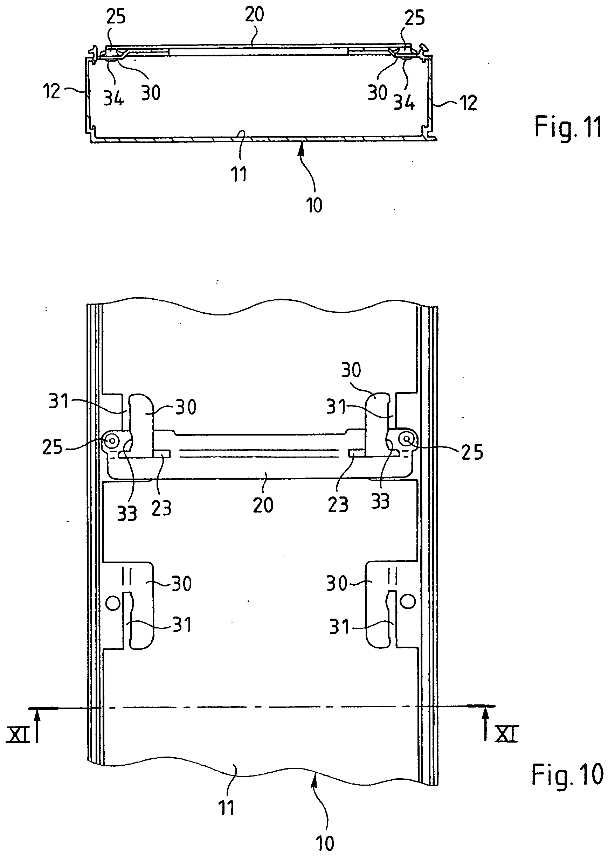

Les figures 7 à 11 montrent une variante de réalisation du socle de goulotte 10 représenté sur les figures 1 à 5, selon laquelle les deux ailes latérales 12 du socle de goulotte 10 portent, en saillie, en équerre, sur leurs faces intérieures tournées l'une vers l'autre, une pluralité d'agrafes de retenue 20 détachables.

Ces agrafes de retenue 20 sont identiques à celles décrites précédemment, elles viennent de formation avec ledit socle de goulotte et sont reliées chacune par un lien frangible 21 à chacune des ailes latérales 12 dudit socle. Elles sont situées à proximité des bords longitudinaux d'extrémité libre desdites ailes latérales 12 et s'étendent selon l'axe longitudinal X du socle de goulotte en étant espacées les unes des autres d'un pas régulier.

Les deux ailes latérales 12 portent, également, en équerre, sur leur face intérieure, une pluralité de crochets 30 pour le montage de la pluralité d'agrafes de retenue 20 détachables.

Ces crochets 30 sont identiques à ceux décrits précédemment et sont alternées avec les agrafes de retenue 20 détachables. Ici, chaque agrafe de retenue 20 comporte, à chacune de ses extrémités 20A, 20B opposées, une fente 23 identique pour l'engagement sur deux crochets 30 en vis-à-vis.

Avantageusement, selon le mode de réalisation représenté, les crochets 30 portés par chaque aile latérale 12 sont alternativement orientés dans des sens opposés, de sorte que deux crochets 30 successifs situés sur la même aile latérale présentent leurs fentes 31 tournées l'une vers l'autre.

La mise en place de chaque agrafe de retenue 20 détachée du socle de goulotte 10 sur deux crochets 30 disposés en vis-à-vis est alors réalisée de la manière suivante.

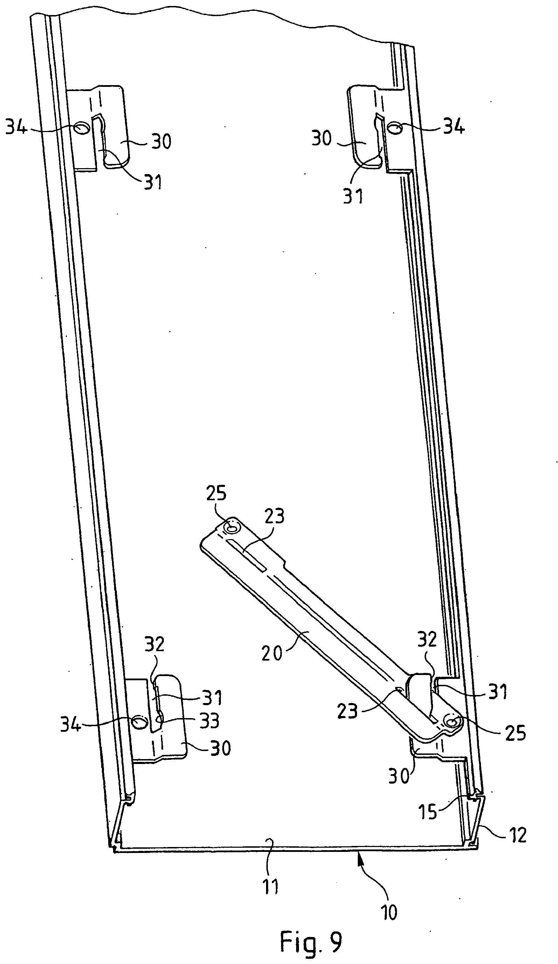

Comme le montre plus particulièrement la figure 9, tout d'abord, l'agrafe de retenue 20 détachée du socle de goulotte 10 est engagée par une de ses fentes 23 sur un des crochets 30 de telle sorte que son téton 25 correspondant s'engage dans le renfoncement 34 du crochet 30 pour former des moyens de pivotement de ladite agrafe de retenue 20. Puis, l'agrafe de retenue 20 est pivotée en direction du crochet 30 positionné en vis-à-vis sur l'autre aile latérale 12 et est engagée par son autre fente 23 sur ce dernier jusqu'à ce que le téton 25 qu'elle porte à proximité de cette fente 23 s'engage dans ledit renfoncement 34 dudit crochet 30.

L'engagement du dernier téton 25 de l'agrafe de retenue 20 dans le renfoncement 34 du crochet 30 indique à l'installateur le bon positionnement de l'agrafe de retenue 20 sur les deux crochets 30 et assure son immobilisation.

L'orientation relative des crochets 30 successifs selon des sens opposés permet avantageusement de monter l'agrafe de retenue 20 sur deux crochets en vis-à-vis par pivotement de gauche à droite ou de droite à gauche. Cela est particulièrement avantageux lorsque l'installateur veut monter une agrafe de retenue 20 dans un endroit peu accessible du socle de goulotte 10 du fait qu'il se situe à proximité d'une paroi. En effet, cela permet de montrer l'agrafe de retenue en la pivotant de l'extérieur vers l'intérieur du socle de goulotte ou en la pivotant de l'intérieur vers l'extérieur dudit socle. En outre, cela évite de donner un sens de montage à la goulotte.

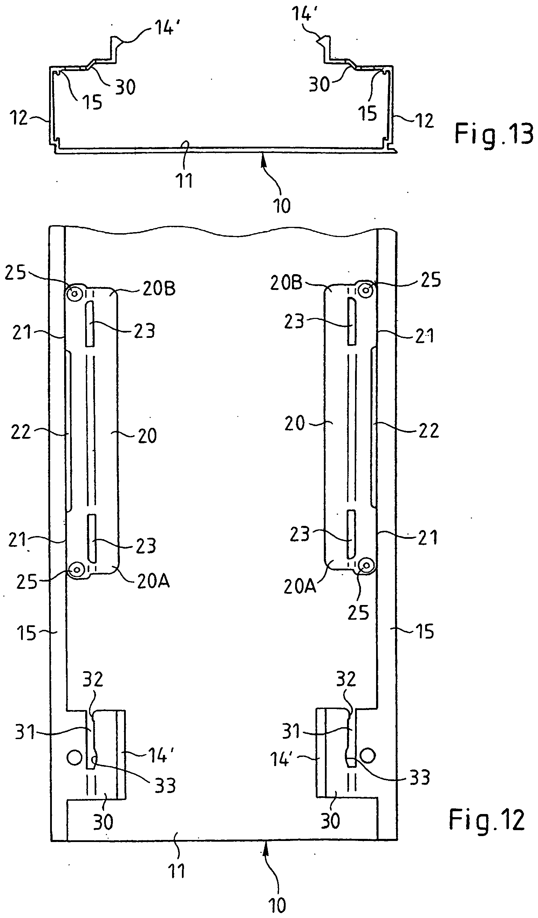

Les figures 12 et 13 montrent une variante de réalisation du socle de goulotte 10 représenté sur les figures précédentes, selon laquelle les moyens de montage du couvercle de fermeture (non représenté) ne sont pas situés sur les faces extérieures des ailes latérales 12 du socle de goulotte 10 mais sur les bords longitudinaux d'extrémité libre des crochets 30 portés par les retours 15 dirigés l'un vers l'autre desdites ailes latérales 12.

Ces moyens de montage sont par exemple une dent d'encliquetage 14' qui s'étend le long du bord longitudinal d'extrémité libre de chaque crochet 30 porté par les retours 15 desdites ailes latérales 12.

Ainsi, le couvercle de fermeture non représenté s'accroche ponctuellement aux extrémités des crochets.

Selon le mode de réalisation représenté sur les figures 12 et 13, les crochets 30 font partie intégrante des retours 15 dirigés l'un vers l'autre des ailes latérales 12 puisqu'ils intègrent les moyens de montage du couvercle de fermeture de ce socle de goulotte 10.

Bien entendu, ce socle de goulotte 10 intègre les agrafes de retenue 20 détachables qui font saillie de chacun des retours 15 desdites ailes latérales 12. Ces agrafes de retenue 20 sont identiques à celles représentées sur les figures 7 à 11 et ne seront pas décrites ici une nouvelle fois.

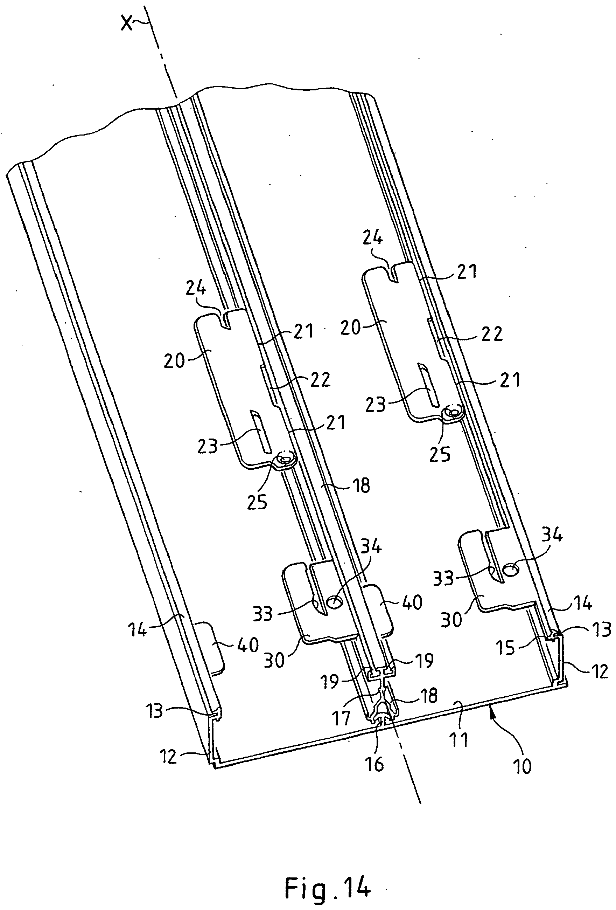

Sur la figure 14, on a représenté une autre variante de réalisation du socle de goulotte 10 selon l'invention, selon laquelle les agrafes de retenue détachables sont portées en saillie notamment par une cloison solidaire du fond 11 du socle de goulotte 10.

Les agrafes de retenue qui viennent de formation avec ladite cloison 17 sont reliées à elle par un lien frangible 21.

Plus particulièrement, chaque agrafe de retenue 20 détachable est positionnée en équerre sur une face de ladite cloison 17 à proximité d'un bord d'extrémité libre 18A et s'étend selon l'axe longitudinal X du socle de goulotte 10.

Cette cloison 17 est ici une cloison de fractionnement qui comporte, à proximité de son bord d'extrémité libre 18A, sur ses deux faces, des gorges longitudinales 19 pour le montage d'un couvercle de fermeture. Ainsi, chaque agrafe de retenue 20 s'étend au-dessus de la gorge longitudinale 19 correspondante de la cloison 17 de fractionnement.

La cloison 17 de fractionnement est ici rapportée par une pince de montage 18 sur une nervure longitudinale 16 portée par le fond 11 du socle de goulotte 10.

Bien entendu, on pourrait prévoir, selon une variante non représentée, que cette cloison 17 vienne de formation avec le socle de goulotte 10.

On pourrait également prévoir que la cloison 17 porte, en saillie, sur ses deux faces, une pluralité d'agrafes de retenue 20 détachables qui s'étendent selon l'axe longitudinal X dudit socle en étant espacées les unes des autres.

Pour permettre la mise en place des agrafes de retenue au travers des ouvertures longitudinales des compartiments du socle, l'aile latérale 12 portant des agrafes de retenue 20 comporte également, en alternance, des crochets 30, comme décrit précédemment.

La cloison 17 comporte, également, sur une face tournée vers l'aile latérale 12 portant les crochets 30, des moyens pour positionner chaque agrafe de retenue 20 au travers de l'ouverture longitudinale du compartiment correspondant du socle de goulotte. Ces moyens de positionnement peuvent être soit un crochet 30 en équerre, soit une plaquette 40 en équerre, comme cela est représenté sur la figure 14.

L'autre aile latérale 12 du socle de goulotte 10 comporte ici une succession de plaquettes 40 (une seule étant représentée) pour permettre la mise en place des agrafes de retenue 20 entre ladite aile latérale 12 et ladite cloison 17, comme cela a été décrit en référence aux figures 4 à 6.

Bien entendu, pour permettre de monter une agrafe de retenue 20 au travers de chacune des ouvertures longitudinales des compartiments du socle de goulotte, il est avantageux que la cloison porte elle-même des crochets 30 sur la même face que celle portant les agrafes de retenue 20.

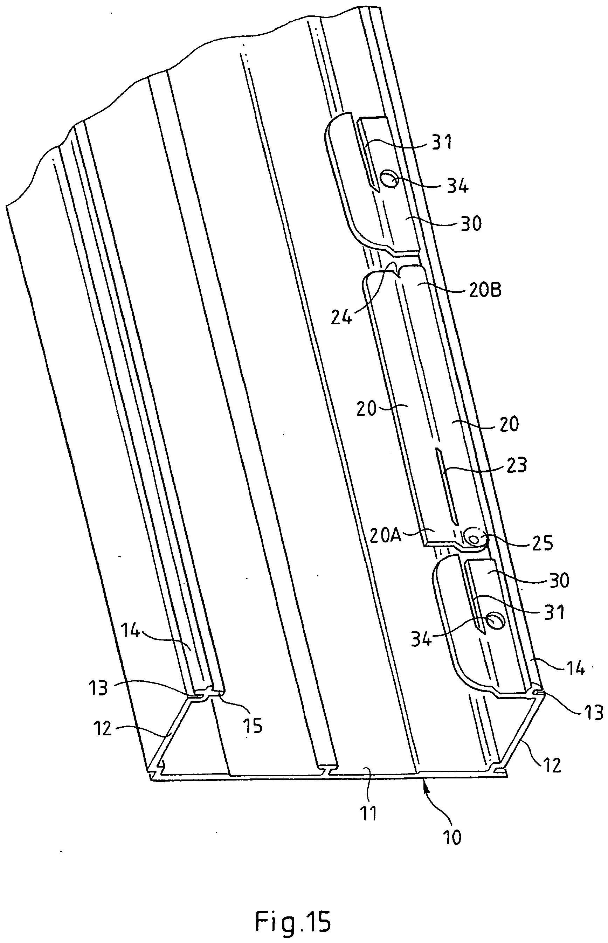

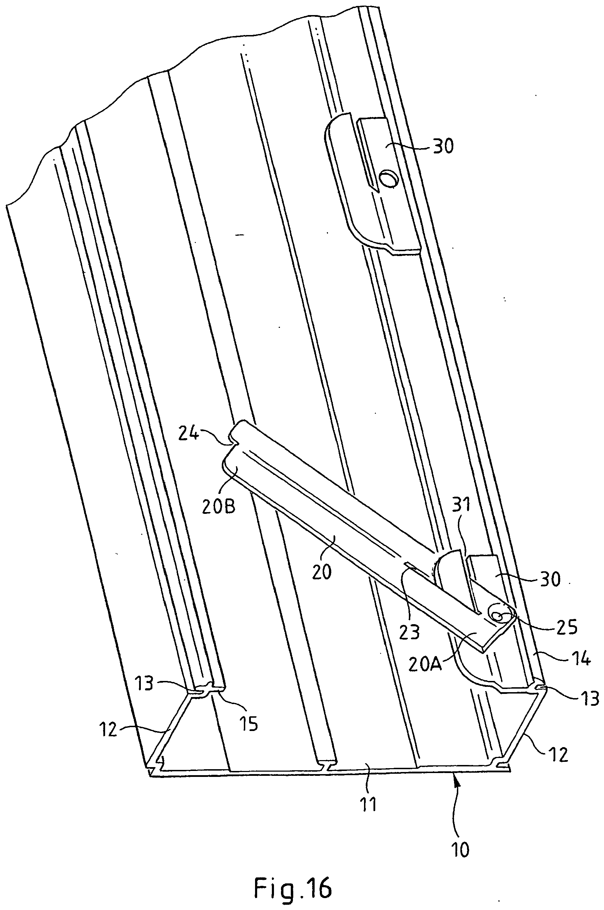

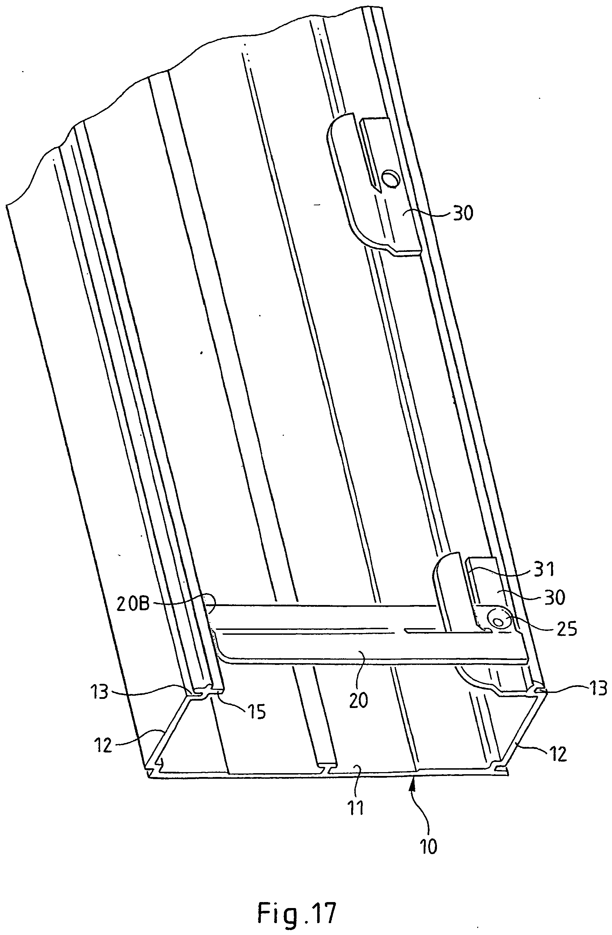

Les figures 15 à 17 montrent une autre variante de réalisation du socle de goulotte 10 pratiquement identique à celle représentée sur la figure 1, mis à part le fait que l'aile latérale 12 de ce socle de goulotte 10 ne portant pas les agrafes de retenue 20 détachables comporte en tête un retour 15 dirigé vers l'autre aile latérale 12 et courant sur toute la longueur de ladite aile latérale 12.

Ainsi, le retour 15 longitudinal remplace la plaquette 40 du socle de goulotte de la figure 1, et l'agrafe de retenue 20 vient se coincer sous ce retour 15 lorsqu'elle s'étend au travers de l'ouverture longitudinale définie entre les ailes latérales 12 du socle de goulotte 10.

Avantageusement, les agrafes de retenue 20 rattachées aux parties des socles de goulotte 10 représentés sur les figures 1 à 17 viennent de formation avec les parties correspondantes du socle de goulotte.

Pour ce faire, le socle de goulotte 10 correspondant sort d'extrusion avec une ou les deux ailes latérales 12 présentant un retour en équerre dont la largeur correspond à la largeur du crochet 30 et de chaque agrafe de retenue 20 correspondante. Puis, par une opération de matriçage, des découpes sont pratiquées pour former sur chaque crochet 30 la fente 31 d'engagement ainsi que le renfoncement 34 et, sur chaque agrafe de retenue 20, les fentes 23, 24 ainsi qu'une découpe 22 entre le bord longitudinal de l'agrafe de retenue 20 et l'aile latérale 12 correspondante. Cela permet de fragiliser le rattachement de l'agrafe de retenue 20 à l'aile latérale 12 correspondante.

Par cette opération de matriçage, on peut former des amorces de rupture au niveau du lien frangible 21 rattachant chaque agrafe de retenue 20 à l'aile latérale 12 correspondante.

Bien entendu, les amorces de rupture formées au niveau des liens frangibles 21 rattachant les agrafes de retenue 20 à l'aile latérale 12 correspondante peuvent être réalisées directement par extrusion. Cela est seulement possible si l'agrafe de retenue est placée sur un côté du socle de goulotte et si le crochet de montage de l'agrafe de retenue est placé sur le côté opposé de ce socle car, si le crochet de montage est positionné du même côté que l'agrafe de retenue, la réalisation par extrusion des amorces de rupture sur l'agrafe de retenue fragilise aussi ledit crochet.

Le même procédé de réalisation des agrafes de retenue 20 détachables est mis en oeuvre pour réaliser la cloison 17 qui sort d'extrusion avec, sur une ou deux de ses faces, un retour en équerre de largeur pratiquement identique à celle de chaque agrafe de retenue. Puis, par une opération de découpe, on réalise les différentes fentes de chaque agrafe de retenue ainsi que la découpe 22 longitudinale permettant de fragiliser le rattachement de cette agrafe de retenue à la cloison 17 correspondante.

De façon particulièrement avantageuse, les agrafes de retenue 20 sont positionnées en saillie des différentes parties du socle de goulotte 10 et, lorsqu'elles sont détachées de ce socle de goulotte, elles laissent intactes les parties essentielles constitutives de celui-ci.

Bien entendu, les longueurs des agrafes de retenue 20 sont adaptées à la largeur des ouvertures longitudinales qu'elles doivent traverser de manière qu'elles se coincent à leurs deux extrémités sur le socle de goulotte.

Les figures 18A et 18B montrent un élément de fermeture 50 d'un des socles de goulotte 10 représentés sur les figures 1 à 11 et 14 à 17, qui comporte une paroi de fermeture 52 et des pattes de montage 51 bordant extérieurement cette paroi de fermeture 52. Les pattes de montage 51 permettent un encliquetage de l'élément de fermeture 50 dans les rainures longitudinales 13 prévues sur les faces extérieures des ailes latérales 12 du socle de goulotte 10.

Avantageusement, selon l'invention, un tel élément de fermeture intègre au moins une agrafe de retenue 20 de câbles électriques détachable, qui vient de formation avec ledit élément de fermeture 50, et qui fait saillie d'une partie 51, 52 de ce dernier en étant rattachée à cette partie par un lien frangible 21.

Les agrafes de retenue 20 représentées sur les figures 18A et 18B sont identiques à celles représentées sur les figures précédentes et ne seront pas décrites ici une nouvelle fois.

Pour l'essentiel, l'élément de fermeture 50 peut comporter une pluralité d'agrafes de retenue détachables espacées les unes des autres selon la direction longitudinale de celui-ci.

Selon le mode de réalisation représenté sur la figure 18B, chaque agrafe de retenue est rattachée à la face intérieure de la paroi de fermeture 52, alors que, selon le mode de réalisation représenté sur la figure 18A, chaque agrafe de retenue 20 détachable est rattachée à un bord extérieur d'une patte de montage 51 de l'élément de fermeture 50.

Ici aussi, lorsque les agrafes de retenue 20 sont détachées de l'élément de fermeture 50, elles laissent intact ledit élément de fermeture, ce qui est particulièrement avantageux.

Selon le mode de réalisation représenté sur la figure 18B, l'installateur peut même laisser en place les agrafes de retenue non utilisées puisque celles-ci, de faible épaisseur, ne gênent en rien la mise en place de l'élément de fermeture 50 sur le socle de goulotte 10 correspondant.

Bien entendu, selon l'invention, on pourrait prévoir qu'un élément d'habillage, non représenté sur les figures, par exemple un couvercle latéral à rapporter sur la face extérieure d'une aile latérale du socle de goulotte, intègre lui aussi au moins une agrafe de retenue 20 de câbles électriques identique à celle représentée sur la figure 18A en venant de formation avec ledit élément d'habillage et en faisant saillie d'une partie de ce dernier tout en étant rattachée à cette partie par un lien frangible.

Un tel élément d'habillage, par exemple un couvercle latéral ou un joint de sol, peut comporter une pluralité d'agrafes de retenue détachables espacées les unes des autres selon la direction longitudinale dudit élément d'habillage.

Avantageusement, l'élément de fermeture 50 ou l'élément d'habillage non représenté peut sortir d'extrusion avec une bande de matière supplémentaire dont la largeur est égale à celle des agrafes de retenue 20. Puis, cette bande de matière peut être découpée par matriçage pour former chaque agrafe de retenue 20 avec ses fentes, ainsi que son ou ses tétons 25 et sa découpe 22, comme cela est représenté sur les figures 18A et 18B.

Selon l'invention, également, on peut prévoir qu'une goulotte de cheminement de câbles ou de conducteurs électriques comprend un socle, un élément de fermeture 50 tel que représenté sur les figures 18A et 18B, et un élément d'habillage du même type que celui décrit précédemment.

Dans ce cas, le socle comprend une aile latérale et/ou une cloison qui porte(nt), en équerre, sur sa (leur) face tournée vers l'autre aile latérale, au moins un crochet pour le montage d'une agrafe de retenue détachée de l'élément de fermeture ou de l'élément d'habillage, ladite agrafe de retenue comportant à une extrémité une fente 23 pour l'engagement sur le crochet.

Le socle de cette goulotte peut comporter, comme les socles de goulotte 10 représentés sur les précédentes figures, une pluralité de crochets de montage orientés dans le même sens ou alternativement dans des sens opposés.

Bien entendu, les ailes latérales du socle de goulotte précité peuvent porter, en équerre, sur leurs faces tournées l'une vers l'autre, une pluralité de crochets pour le montage d'une pluralité d'agrafes entre les crochets par leurs fentes correspondantes.

Enfin, selon l'invention, on peut prévoir une goulotte comprenant un des socles de goulotte 10 représentés sur les figures 1 à 17, et un élément de fermeture 50 représenté sur les figures 18A et 18B et/ou un élément d'habillage tel que décrit précédemment intégrant lui-même une ou plusieurs agrafes de retenue détachables.

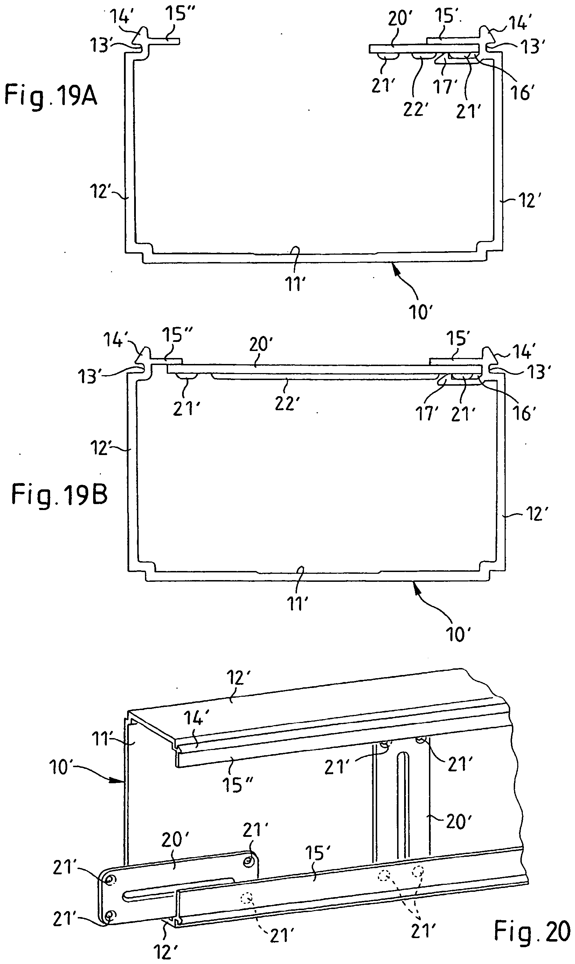

Sur les figures 19A, 19B et 20 on a représenté une autre variante du socle de goulotte 10' selon l'invention qui présente un fond 11' à partir duquel s'élèvent deux ailes latérales 12' parallèles.

Les ailes latérales 12' du socle de goulotte 10' viennent de formation avec le fond 11' et comprennent, à proximité de leur bord d'extrémité libre, sur leur face externe, une rainure longitudinale 13' surmontée par un bourrelet d'encliquetage 14' permettant le montage d'un élément de fermeture non représenté.

Ici, les ailes latérales 12' du socle de goulotte 10' sont différentes dans la mesure où, d'une part, une des deux parois latérales 12' porte, en équerre, en tête, sur sa face tournée vers l'autre aile latérale 12', un retour intérieur 15' et une gorge longitudinale 16' courant sous le retour intérieur 15', bordée par un bourrelet 17', et, d'autre part, l'autre paroi latérale 12' porte, en équerre, en tête, sur sa face tournée vers l'autre aile latérale 12', un retour intérieur 15" simple, c'est-à-dire sans gorge longitudinale courant sous le retour intérieur.

En outre, selon ce mode de réalisation, chaque agrafe de retenue 20' détachable du socle 10' porte, au moins à une extrémité, deux pions 21' faisant saillie d'une face de l'agrafe tournée vers l'intérieur du socle 10'. Le bourrelet 17' prévu en bordure de la gorge longitudinale 16' portée par l'aile latérale 12' correspondante du socle 10' est destiné à l'accrochage des deux pions 21' de chaque agrafe de retenue 20' et le retour intérieur 15" simple prévu sur l'autre aile latérale 12' du socle 10' est adapté au positionnement et à l'appui de l'extrémité de chaque agrafe de retenue 20' opposée à celle bordant lesdits pions 21'.

Comme le montre la figure 20, l'agrafe de retenue 20' peut être positionnée selon deux positions sur le socle 10'. En position d'attente ou en position d'éclisse, l'agrafe de retenue 20' est placée selon l'axe longitudinal du socle 10' en étant engagée entre le retour intérieur 15' et la gorge longitudinale 16' de l'aile latérale 12' correspondante du socle, au moins un desdits pions 21' coopérant avec le bourrelet 17' correspondant du socle 10'. Dans la position de retenue de câbles où l'agrafe de retenue 20' s'étend transversalement à l'ouverture longitudinale du socle 10', les deux pions 21' portés par l'agrafe de retenue 20' sont positionnés dans la gorge longitudinale 16' du socle 10' derrière le bourrelet 17' correspondant et l'extrémité opposée de l'agrafe de retenue 20' à celle portant les pions 21' est positionnée sous le retour intérieur 15" simple de l'autre aile latérale 12' qui constitue un appui pour ladite extrémité.

Pour mettre en place l'agrafe de retenue 20' en position de retenue de câbles, il suffit d'engager un des pions 21' de l'agrafe de retenue 20' dans la gorge longitudinale 16' derrière le bourrelet 17' et de faire pivoter l'agrafe de retenue 20' autour de ce pion 21' servant d'axe de rotation jusqu'à engager l'autre pion 21' situé à côté du premier pion 21' sur la même extrémité de l'agrafe de retenue 20' dans la gorge longitudinale 16' derrière le bourrelet 17' pour verrouiller l'agrafe sur le socle 10'. Ainsi, on fait pivoter l'agrafe de retenue 20' depuis sa position d'attente jusqu'à sa position de retenue de câbles.

Les deux pions 21' situés à l'extrémité de l'agrafe de retenue 20' permet à celle-ci d'être mise en place sur le socle 10' par pivotement vers la droite ou par pivotement vers la gauche.

Selon l'exemple représenté, l'agrafe de retenue 20' porte, à chacune de ses extrémités, deux pions 21', ce qui permet d'éviter que cette agrafe de retenue ait un sens de montage sur le socle 10'.

Pour faire jouer à l'agrafe de retenue 20' le rôle d'une éclisse permettant la jonction entre deux socles 10' du même type, il suffit de la faire dépasser de l'extrémité coupée du socle 10' lorsqu'elle est positionnée selon l'axe longitudinal du socle, comme représenté sur la figure 20.

Avantageusement, chaque agrafe de retenue 20' porte, ici, sur sa face tournée vers l'intérieur du socle, une nervure longitudinale 22' de rigidification. En fonction de la largeur de chaque agrafe de retenue 20', celle-ci peut comporter plusieurs nervures longitudinales.

Selon une variante non représentée, chaque agrafe de retenue 20' peut porter également, sur sa face interne tournée vers l'intérieur du socle 10', dans sa partie médiane, des pions 21' pour immobiliser en rotation et pour renforcer la retenue de l'agrafe de retenue 20' sur le socle 10' lorsqu'elle est positionnée dans le sens longitudinal du socle, comme représenté sur la figure 20. Chaque agrafe de retenue 20' est réalisée d'une seule pièce par moulage d'une matière plastique (par exemple par extrusion) avec le socle 10' associé.

## Revendications

1. Socle de goulotte (10 ; 10') intégrant au moins une agrafe de retenue (20 ; 20') de câbles électriques détachable qui vient de formation avec ledit socle de goulotte (10 ; 10'), **caractérisé en ce que** chaque agrafe de retenue (20 ; 20') fait saillie d'une partie ( 11, 12 ; 17 ; 12') dudit socle de goulotte (10 ; 10') en étant rattachée à cette partie (11, 12 ; 17 ; 12') par un lien frangible (21).

2. Socle (10 ; 10') selon la revendication 1, **caractérisé en ce que** chaque agrafe de retenue (20 ; 20') détachable est située à l'intérieur dudit socle (10 ; 10').

3. Socle (10 ; 10') selon l'une des revendications 1 ou 2, **caractérisé en ce que** chaque agrafe de retenue (20 ; 20') détachable est rattachée à une aile latérale (12 ; 12') du socle (10 ; 10') et s'étend selon l'axe longitudinal (X) dudit socle (10 ; 10').

4. Socle (10 ; 10') selon la revendication 3, **caractérisé en ce que** chaque agrafe de retenue (20 ; 20') détachable est située à proximité d'un bord d'extrémité libre (14 ; 14') de cette aile latérale (12 ; 12').

5. Socle (10 ; 10') selon la revendication 4, **caractérisé en ce que** chaque agrafe de retenue (20 ; 20') est rattachée à un retour d'aile (15 ; 15') dirigé vers l'autre aile latérale (12 ; 12') dudit socle (10 ; 10').

6. Socle (10 ; 10') selon l'une des revendications 3 à 5, **caractérisé en ce qu'**une aile latérale (12 ; 12') porte, en équerre, sur sa face intérieure, une pluralité d'agrafes de retenue (20 ; 20') détachables qui s'étendent selon l'axe longitudinal (X) dudit socle en étant espacées les une des autres.

7. Socle (10) selon la revendication 6, **caractérisé en ce que** les deux ailes latérales (12) dudit socle (10) portent, en équerre, sur leur face intérieure, une pluralité d'agrafes de retenue (20) détachables qui s'étendent selon l'axe longitudinal (X) dudit socle (10) en étant espacées les une des autres.

8. Socle (10 ; 10') selon l'une des revendications 6 ou 7, **caractérisé en ce que** lesdites agrafes de retenue (20 ; 20') sont régulièrement espacées les unes des autres.

9. Socle (10) selon l'une des revendications précédentes, **caractérisé en ce que** chaque agrafe de retenue (20) détachable est rattachée à une cloison (17) solidaire du fond (11) du socle (10) pour former plusieurs compartiments à l'intérieur de ce dernier.

10. Socle (10) selon la revendication 9, **caractérisé en ce que** chaque agrafe de retenue (20) détachable est positionnée en équerre sur une face de ladite cloison (17), à proximité du bord d'extrémité libre (18A) de ladite cloison (17), et s'étend selon l'axe longitudinal (X) dudit socle.

11. Socle (10) selon l'une des revendications 9 ou 10, **caractérisé en ce que** ladite cloison (17) porte, en équerre, sur une de ses faces, une pluralité d'agrafes de retenue (20) détachables qui s'étendent selon l'axe longitudinal (X) dudit socle (10) en étant espacées les unes des autres.

12. Socle (10) selon l'une des revendications 10 ou 11, **caractérisé en ce que** ladite cloison (17) porte, en équerre, sur ses deux faces, une pluralité d'agrafes de retenue détachables qui s'étendent selon l'axe longitudinal dudit socle en étant espacées les unes des autres.

13. Socle selon l'une des revendications 10 à 12, **caractérisé en ce que** la cloison vient de formation avec le socle.

14. Socle (10) selon l'une des revendications 10 à 12, **caractérisé en ce que** la cloison (17) est rapportée sur le fond (11) du socle (10).

15. Socle (10) selon l'une des revendications précédentes, **caractérisé en ce qu'**une aile latérale (12) et/ou une cloison (17) porte(nt), en équerre, sur sa (leur) face tournée vers l'autre aile latérale, au moins un crochet (30) pour le montage de ladite agrafe de retenue (20) détachable, ladite agrafe de retenue (20) comportant à une extrémité (20A) une fente (23) pour l'engagement sur ledit crochet (30).

16. Socle (10) selon la revendication 15, **caractérisé en ce que** ladite aile latérale (12) et/ou ladite cloison (17) porte(nt), en équerre, sur sa (leur) face tournée vers l'autre aile latérale (12), une pluralité de crochets (30) pour le montage d'une pluralité d'agrafes de retenue (20) détachables, chaque agrafe de retenue (20) comportant à une extrémité (20A) une fente (23) pour l'engagement sur un crochet (30).

17. Socle (10) selon l'une des revendications 15 ou 16, **caractérisé en ce que** chaque agrafe de retenue (20) détachable présente une longueur telle que l'extrémité (20B) opposée à celle comportant ladite fente (23) est apte à s'engager sous un retour (15 ; 40) de l'autre aile latérale (12) ou d'une cloison (17) exempte de crochet.

18. Socle (10) selon l'une des revendications 15 ou 16, **caractérisé en ce que** les deux ailes latérales (12) portent, en équerre, sur leur face tournée vers l'autre aile latérale, une pluralité de crochets (30) pour le montage d'une pluralité d'agrafes de retenue (20) détachables, chaque agrafe de retenue (20) comportant, à chacune de ses extrémités (20A, 20B) opposées, une fente (23) pour l'engagement sur un crochet.

19. Socle (10) selon l'une des revendications 16 à 18, **caractérisé en ce que** lesdits crochets (30) sont alternés avec des agrafes de retenue (20) détachables.

20. Socle (10) selon l'une des revendications 16 à 18, **caractérisé en ce que** les crochets (30) portés par une aile latérale (12) et/ou une cloison (17) sont orientés dans le même sens.

21. Socle (10) selon l'une des revendications 16 à 20, **caractérisé en ce que** les crochets (30) portés par une aile latérale (12) et/ou une cloison (17) sont alternativement orientés dans des sens opposés.

22. Socle (10) selon l'une des revendications 15 à 21, **caractérisé en ce que** chaque agrafe de retenue (20) détachable comporte un moyen de pivotement (25) apte à coopérer avec un moyen de pivotement (34) complémentaire prévu sur chaque crochet (30) lorsque l'agrafe de retenue (20) est introduite par sa fente (23) sur ledit crochet (30), pour autoriser un pivotement de l'agrafe de retenue (20) sur ledit crochet (30) entre une première position extrême dans laquelle l'agrafe de retenue (20) s'étend le long d'une aile latérale (12) ou d'une cloison (17) dudit socle (10) et une deuxième position extrême dans laquelle l'agrafe de retenue (20) s'étend au travers de l'ouverture longitudinale dudit socle (10) ou d'un compartiment de celui-ci.

23. Socle (10) selon la revendication 22, **caractérisé en ce que** ledit moyen de pivotement prévu sur chaque agrafe de retenue (20) détachable est un téton (25) et ledit moyen de pivotement complémentaire prévu sur chaque crochet (30) est un renfoncement (34) ou un trou accueillant ledit téton (25).

24. Socle (10) selon l'une des revendications 15 à 23, **caractérisé en ce que** chaque crochet (30) comporte une dent de retenue (32) de chaque agrafe de retenue (20) engagée par sa fente (23) sur ledit crochet (30).

25. Socle (10) selon l'une des revendications 15 à 24, **caractérisé en ce que** chaque crochet (30) vient de formation avec l'aile latérale (12) ou la cloison (17) qui le porte.

26. Socle (10) selon l'une des revendications 18 à 25, **caractérisé en ce qu'**il est prévu, sur le bord d'extrémité libre des crochets (30), des moyens de montage (14') d'un couvercle de fermeture du socle (10).

27. Socle (10') selon l'une des revendications 1 à 14, **caractérisé en ce qu'**il comporte un fond (11') bordé par deux parois latérales (12') parallèles différentes, à savoir, d'une part, une paroi latérale (12') portant, en équerre, sur sa face tournée vers l'autre aile latérale (12'), un retour intérieur (15') et une gorge longitudinale (16') courant sous le retour intérieur (15'), bordée par un bourrelet (17'), et, d'autre part, une paroi latérale (12') portant, en équerre, sur sa face tournée vers l'autre aile latérale (12'), un retour intérieur (15") simple, et **en ce que** chaque agrafe de retenue (20') porte, au moins à une extrémité, deux pions (21') faisant saillie d'une face de l'agrafe de retenue (20') tournée vers l'intérieur du socle (10'), ledit bourrelet (17') étant destiné à l'accrochage des deux pions (21') de chaque agrafe de retenue (20') et ledit retour intérieur (15") simple étant adapté au positionnement et à l'appui de l'extrémité de chaque agrafe de retenue (20') opposée à celle portant lesdits pions (21').

28. Socle (10') selon la revendication 27, **caractérisé en ce que** chaque agrafe de retenue (20') porte, à chacune de ses deux extrémités, deux pions (21') faisant saillie de la face de l'agrafe de retenue (20') tournée vers l'intérieur du socle (10').

29. Socle (10') selon l'une des revendications 27 ou 28, **caractérisé en ce que** chaque agrafe de retenue (20') porte, sur sa face tournée vers l'intérieur du socle (10'), six pions, une paire de pions à chaque extrémité et une paire de pions située en partie médiane.

30. Socle (10') selon l'une des revendications 27 à 29, **caractérisé en ce que** chaque agrafe de retenue (20') porte, sur sa face tournée vers l'intérieur du socle (10'), au moins une nervure longitudinale (22').

31. Elément de fermeture (50) à rapporter sur un socle de goulotte (10) pour fermer l'ouverture longitudinale définie entre ses ailes latérales (12), **caractérisé en ce qu'**il intègre au moins une agrafe de retenue (20) de câbles électriques détachable qui vient de formation avec ledit élément de fermeture (50) en faisant saillie d'une partie (51, 52) de ce dernier et en étant rattachée à cette partie par un lien frangible (21).

32. Elément de fermeture (50) selon la revendication 31, **caractérisé en ce qu'**il comporte une pluralité d'agrafes de retenue détachables espacées les unes des autres selon la direction longitudinale dudit élément de fermeture.

33. Elément de fermeture (50) selon l'une des revendications 31 ou 32, **caractérisé en ce que** chaque agrafe de retenue est rattachée à la face intérieure de la paroi de fermeture (52) dudit élément de fermeture (50).

34. Elément de fermeture (50) selon l'une des revendications 31 ou 32, **caractérisé en ce que** chaque agrafe de retenue (20) détachable est rattachée à un bord extérieur de l'élément de fermeture (50).

35. Elément d'habillage à rapporter sur un socle de goulotte, **caractérisé en ce qu'**il intègre au moins une agrafe de retenue de câbles électriques détachable qui vient de formation avec ledit élément d'habillage en faisant saillie d'une partie de ce dernier et en étant rattachée à cette partie par un lien frangible.

36. Elément d'habillage selon la revendication 35, **caractérisé en ce qu'**il comporte une pluralité d'agrafes de retenue détachables espacées les unes des autres selon la direction longitudinale dudit élément d'habillage.

37. Goulotte de cheminement de câbles ou de conducteurs électriques comprenant un socle, un élément de fermeture (50) selon l'une des revendications 31 à 34 et/ou un élément d'habillage selon les revendications 35 ou 36, ledit socle comprenant une aile latérale et/ou une cloison qui porte(nt), en équerre, sur sa (leur) face tournée vers l'autre aile latérale, au moins un crochet pour le montage d'une agrafe de retenue détachable, ladite agrafe de retenue comportant à une extrémité une fente pour l'engagement sur ledit crochet.

38. Goulotte selon la revendication 37, **caractérisée en ce que** ladite aile latérale et/ou ladite cloison dudit socle porte(nt), en équerre, sur sa (leur) face tournée vers l'autre aile latérale, une pluralité de crochets pour le montage d'une pluralité d'agrafes de retenue détachables, chaque agrafe de retenue comportant à une extrémité une fente pour l'engagement sur un crochet.

39. Goulotte selon l'une des revendications 37 ou 38, **caractérisée en ce que** chaque agrafe de retenue détachable présente une longueur telle que l'extrémité opposée à celle comportant ladite fente est apte à s'engager sous un retour de l'autre aile latérale ou d'une cloison exempte de crochet dudit socle.

40. Goulotte selon l'une des revendications 37 à 39, **caractérisée en ce que** les deux ailes latérales portent, en équerre, sur leur face tournée vers l'autre aile latérale, une pluralité de crochets pour le montage d'une pluralité d'agrafes de retenue détachables, chaque agrafe de retenue comportant, à chacune de leurs extrémités opposées, une fente pour l'engagement sur un crochet.

41. Goulotte selon l'une des revendications 38 à 40, **caractérisée en ce que** lesdits crochets sont alternés avec des agrafes de retenue détachables.

42. Goulotte selon l'une des revendications 38 à 41, **caractérisée en ce que** les crochets portés par une aile latérale et/ou une cloison sont orientés dans le même sens.

43. Goulotte selon l'une des revendications 38 à 41, **caractérisée en ce que** les crochets portés par une aile latérale et/ou une cloison sont alternativement orientés dans des sens opposés.

44. Goulotte selon l'une des revendications 37 à 43, **caractérisée en ce que** chaque agrafe de retenue détachable comporte un moyen de pivotement apte à coopérer avec un moyen de pivotement complémentaire prévu sur chaque crochet lorsque l'agrafe de retenue est introduite par sa fente sur ledit crochet, pour autoriser un pivotement de l'agrafe de retenue sur ledit crochet entre une première position dans laquelle l'agrafe de retenue s'étend le long d'une aile latérale ou d'une cloison dudit socle et une deuxième position dans laquelle l'agrafe de retenue s'étend au travers de l'ouverture longitudinale dudit socle ou d'un compartiment de celui-ci.

45. Goulotte selon la revendication 44, **caractérisée en ce que** ledit moyen de pivotement prévu sur chaque agrafe de retenue détachable est un téton et ledit moyen de pivotement complémentaire prévu sur chaque crochet est un renfoncement ou un trou accueillant ledit téton.

46. Goulotte selon l'une des revendications 37 à 45, **caractérisée en ce que** chaque crochet comporte une dent de retenue de chaque agrafe de retenue engagée par sa fente sur ledit crochet.

47. Goulotte selon l'une des revendications 37 à 46, **caractérisée en ce que** chaque crochet vient de formation avec l'aile latérale ou la cloison qui le porte.

48. Goulotte selon l'une des revendications 37 à 47, **caractérisée en ce qu'**il est prévu, sur le bord d'extrémité libre des crochets, des moyens de montage d'un couvercle de fermeture du socle.

49. Goulotte de cheminement de câbles ou de conducteurs électriques qui comporte un socle selon l'une des revendications 1 à 30 et/ou un élément de fermeture selon l'une des revendications 31 à 34 et/ou un élément d'habillage selon l'une des revendications 35 ou 36.

## Patentansprüche

1. Kabelkanalsockel (10; 10') mit wenigstens einer lösbaren Klammer (20; 20') zum Halten elektrischer Kabel, die mit dem Kabelkanalsockel (10; 10') einstückig angeformt ist,
**dadurch gekennzeichnet, dass** jede Halteklammer (20; 20') an einem Teil (11, 12; 17; 12') des Kabelkanalsockels (10; 10') vorsteht und dabei an diesem Teil (11, 12; 17; 12') durch ein zerbrechbares Verbindungsteil (21) befestigt ist.

2. Sockel (10; 10') nach Anspruch 1,
**dadurch gekennzeichnet, dass** jede lösbare Halteklammer (20; 20') innen im Sockel (10; 10') angeordnet ist.

3. Sockel (10; 10') nach einem der Ansprüche 1 oder 2,
**dadurch gekennzeichnet, dass** jede lösbare Halteklammer (20; 20') an einer Seitenwand (12; 12') des Sockels (10; 10') befestigt ist und sich entlang der Längsachse (X) des Sockels (10; 10') erstreckt.

4. Sockel (10; 10') nach Anspruch 3,
**dadurch gekennzeichnet, dass** jede lösbare Halteklammer (20; 20') in der Nähe eines freien Endrands (14; 14') dieser Seitenwand (12; 12') angeordnet ist.

5. Sockel (10; 10') nach Anspruch 4,
**dadurch gekennzeichnet, dass** jede Halteklammer (20; 20') an einer der anderen Seitenwand (12; 12') des Sockels (10; 10') zugewandten Wandumbiegung (15; 15') befestigt ist.

6. Sockel (10; 10') nach einem der Ansprüche 3 bis 5,
**dadurch gekennzeichnet, dass** eine Seitenwand (12; 12') rechtwinklig an ihrer Innenseite mit einer Vielzahl von lösbaren Halteklammern (20; 20') versehen ist, die sich entlang der Längsachse (X) des Sockels voneinander beabstandet erstrecken.

7. Sockel (10) nach Anspruch 6,
**dadurch gekennzeichnet, dass** die zwei Seitenwände (12) des Sockels (10) rechtwinklig an ihrer Innenseite mit einer Vielzahl von lösbaren Halteklammern (20) versehen sind, die sich entlang der Längsachse (X) des Sockels (10) voneinander beabstandet erstrecken

8. Sockel (10; 10') nach einem der Ansprüche 6 oder 7,
**dadurch gekennzeichnet, dass** die Halteklammern (20; 20') gleichmäßig voneinander beabstandet sind.

9. Sockel (10) nach einem der vorhergehenden Ansprüche,
**dadurch gekennzeichnet, dass** jede lösbare Halteklammer (20) an einer fest mit dem Boden (11) des Sockels (10) verbundenen Trennwand (17) befestigt ist, um in diesem mehrere Kammern innen zu bilden.

10. Sockel (10) nach Anspruch 9,
**dadurch gekennzeichnet, dass** jede lösbare Halteklammer (20) rechtwinklig an einer Seite dieser Trennwand (17) in der Nähe des freien Endrands (18A) der Trennwand (17) angeordnet ist und sich entlang der Längsachse (X) des Sockels erstreckt.

11. Sockel (10) nach einem der Ansprüche 9 oder 10,
**dadurch gekennzeichnet, dass** die Trennwand (17) rechtwinklig an einer ihrer Seiten mit einer Vielzahl von lösbaren Halteklammern (20) versehen ist, die sich entlang der Längsachse (X) des Sockels (10) voneinander beabstandet erstrecken.

12. Sockel (10) nach einem der Ansprüche 10 oder 11,
**dadurch gekennzeichnet, dass** die Trennwand (17) rechtwinklig an ihren beiden Seiten mit einer Vielzahl von lösbaren Halteklammern versehen ist, die sich entlang der Längsachse des Sockels voneinander beabstandet erstrecken,

13. Sockel (10) nach einem der Ansprüche 10 bis 12,
**dadurch gekennzeichnet, dass** die Trennwand mit dem Sockel einstückig angeformt ist.

14. Sockel (10) nach einem der Ansprüche 10 bis 12,
**dadurch gekennzeichnet, dass** die Trennwand (17) auf dem Boden (11) des Sockels (10) aufgesetzt ist.

15. Sockel (10) nach einem der vorhergehenden Ansprüche,
**dadurch gekennzeichnet, dass** eine Seitenwand (12) und/oder eine Trennwand (17) rechtwinklig an ihrer der anderen Seitenwand zugewandten Seite wenigstens mit einem Haken (30) zur Montage der lösbaren Halteklammer (20) versehen ist, wobei die Halteklammer (20) an einem Ende (20A) einen Schlitz (23) zum Einstecken des Hakens (30) aufweist.

16. Sockel (10) nach Anspruch 15,
**dadurch gekennzeichnet, dass** die Seitenwand (12) und/oder die Trennwand (17) rechtwinklig an ihrer der anderen Seitenwand (12) zugewandten Seite mit einer Vielzahl von Haken (30) zur Montage einer Vielzahl von lösbaren Halteklammern (20) versehen ist, wobei jede Halteklammer (20) an einem Ende (20A) einen Schlitz (23) zum Einstecken eines Hakens (30) aufweist.

17. Sockel (10) nach einem der Ansprüche 15 oder 16,
**dadurch gekennzeichnet, dass** jede lösbare Halteklammer (20) eine solche Länge aufweist, dass das dem Ende mit Schlitz (23) entgegengesetzte Ende (20B) unter eine Umbiegung (15; 40) der anderen Seitenwand (12) oder einer Trennwand (17) ohne Haken einzugreifen vermag.

18. Sockel (10) nach einem der Ansprüche 15 oder 16,
**dadurch gekennzeichnet, dass** die zwei Seitenwände (12) rechtwinklig an ihrer der anderen Seitenwand zugewandten Seite mit einer Vielzahl von Haken (30) zur Montage einer Vielzahl von lösbaren Halteklammern (20) versehen sind, wobei jede Halteklammer (20) an jedem ihrer entgegengesetzten Enden (20A, 20B) einen Schlitz (23) zum Einstecken eines Hakens aufweist.

19. Sockel (10) nach einem der Ansprüche 16 bis 18,
**dadurch gekennzeichnet, dass** die Haken (30) abwechselnd mit lösbaren Halteklammern (20) angeordnet sind.

20. Sockel (10) nach einem der Ansprüche 16 bis 18,
**dadurch gekennzeichnet, dass** die Haken (30), mit denen eine Seitenwand (12) und/oder eine Trennwand (17) versehen ist, in derselben Richtung ausgerichtet sind.

21. Sockel (10) nach einem der Ansprüche 16 bis 20,
**dadurch gekennzeichnet, dass** die Haken (30), mit denen eine Seitenwand (12) und/oder eine Trennwand (17) versehen ist, abwechselnd in entgegengesetzten Richtungen ausgerichtet sind.

22. Sockel (10) nach einem der Ansprüche 15 bis 21,
**dadurch gekennzeichnet, dass** jede lösbare Halteklammer (20) ein Schwenkmittel (25) umfasst, das mit einem auf jedem Haken (30) vorgesehenen komplementären Schwenkmittel (34) zusammenzuwirken vermag, wenn die Halteklammer (20) mit ihrem Schlitz auf den Haken (30) gesteckt ist, um ein Schwenken der Halteklammer (20) auf dem Haken (30) zwischen einer ersten Endstellung, in der die Halteklammer (20) sich entlang einer Seitenwand (12) oder einer Trennwand (17) des Sockels (10) erstreckt, und einer zweiten Endstellung, in der die Halteklammer (20) sich durch die Längsöffnung des Sockels (10) oder einer Kammer von diesem hindurch erstreckt, zu ermöglichen.

23. Sockel (10) nach Anspruch 22,
**dadurch gekennzeichnet, dass** das auf jeder lösbaren Halteklammer (20) vorgesehene Schwenkmittel ein Zapfen (25) ist, und das auf jedem Haken (30) vorgesehene komplementäre Schwenkmittel eine den Zapfen (23) aufnehmende Vertiefung (34) oder Öffnung ist.

24. Sockel (10) nach einem der Ansprüche 15 bis 23,
**dadurch gekennzeichnet, dass** jeder Haken (30) einen Zahn (32) zum Halten einer jeden mit ihrem Schlitz (23) auf den Haken (30) gesteckten Halteklammer (20) umfasst.

25. Sockel (10) nach einem der Ansprüche 15 bis 24,
**dadurch gekennzeichnet, dass** jeder Haken (30) mit der Seitenwand (12) oder der Trennwand (17), die mit diesem versehen ist, einstückig angeformt ist.

26. Sockel (10) nach einem der Ansprüche 18 bis 25,
**dadurch gekennzeichnet, dass** auf dem freien Endrand der Haken (30) Mittel (14') zur Montage eines Deckels zum Verschließen des Sockels (10) vorgesehen sind.

27. Sockel (10') nach einem der Ansprüche 1 bis 14,
**dadurch gekennzeichnet, dass** er einen von zwei unterschiedlichen parallelen Seitenwänden (12') begrenzten Boden (11') aufweist, nämlich einerseits einer Seitenwand (12'), die rechtwinklig an ihrer der anderen Seitenwand (12') zugewandten Seite mit einer Innenumbiegung (15') und einer unter der Innenumbiegung (15') verlaufenden, von einer Wulst (17') begrenzten Längsnut (16') versehen ist, und anderseits einer Seitenwand (12'), die rechtwinklig an ihrer der anderen Seitenwand (12') zugewandten Seite mit einer einfachen Innenumbiegung (15") versehen ist, und dass jede Halteklammer (20') wenigstens an einem Ende mit zwei Stiften (21') versehen ist, die an einer der Innenseite des Sockels (10') zugewandten Seite der Halteklammer (20') vorstehen, wobei die Wulst (17') dazu bestimmt ist, die beiden Stifte (21') einer jeden Halteklammer (20') festzuhaken, und die einfache Innenumbiegung (15") das Ende einer jeden Halteklammer (20'), das dem mit den Stiften versehenen entgegengesetzt ist, zu positionieren und zu stützen vermag.

28. Sockel (10') nach Anspruch 27,
**dadurch gekennzeichnet, dass** jede Halteklammer (20') an jedem ihrer beiden Enden mit zwei Stiften (21') versehen ist, die an der der Innenseite des Sockels (10') zugewandten Seite der Halteklammer (20') vorstehen.

29. Sockel (10') nach einem der Ansprüche 27 oder 28,
**dadurch gekennzeichnet, dass** jede Halteklammer (20') an ihrer der Innenseite des Sockels (10') zugewandten Seite mit sechs Stiften versehen ist, einem Stiftepaar an jedem Ende und einem Stiftepaar in der Mitte.

30. Sockel (10') nach einem der Ansprüche 27 bis 29,
**dadurch gekennzeichnet, dass** jede Halteklammer (20') an ihrer der Innenseite des Sockels (10') zugewandten Seite mit wenigstens einer Längsrippe (22') versehen ist.

31. Verschlusselement (50), das auf einen Kabelkanalsockel (10) zum Verschließen der zwischen dessen Seitenwänden (12) gebildeten Längsöffnung aufsetzbar ist,
**dadurch gekennzeichnet, dass** es wenigstens eine lösbare Klammer (20) zum Halten elektrischer Kabel umfasst, die mit dem Verschlusselement (50) einstückig ausgebildet ist, wobei sie an einem Teil (51, 52) von diesem vorsteht und dabei durch ein zerbrechbares Verbindungsteil (21) an diesem befestigt ist.

32. Verschlusselement (50) nach Anspruch 31,
**dadurch gekennzeichnet, dass** es eine Vielzahl von lösbaren Halteklammern umfasst, die in Längsrichtung des Verschlusselements voneinander beabstandet sind.

33. Verschlusselement (50) nach einem der Ansprüche 31 oder 32,
**dadurch gekennzeichnet, dass** jede Halteklammer an der Innenseite der Verschlusswand (52) des Verschlusselements (50) befestigt ist.

34. Verschlusselement (50) nach einem der Ansprüche 31 oder 32,
**dadurch gekennzeichnet, dass** jede lösbare Halteklammer (20) an einem Außenrand des Verschlusselements (50) befestigt ist.

35. Verkleidungselement, das auf einen Kabelkanalsockel aufsetzbar ist,
**dadurch gekennzeichnet, dass** es wenigstens eine lösbare Klammer zum Halten elektrischer Kabel umfasst, die mit dem Verkleidungselement einstückig angeformt ist, wobei sie an einem Teil von diesem vorsteht und an diesem Teil durch ein zerbrechbares Verbindungsteil befestigt ist.

36. Verkleidungselement nach Anspruch 35,
**dadurch gekennzeichnet, dass** es eine Vielzahl von lösbaren Halteklammern umfasst, die in Längsrichtung des Verkleidungselements voneinander beabstandet sind.

37. Kabelkanal zum Führen elektrischer Kabel oder Leitungen, mit einem Sockel, einem Verschlusselement (50) nach einem der Ansprüche 31 bis 34 und/oder einem Verkleidungselement nach Anspruch 35 oder 36, wobei der Sockel eine Seitenwand und/oder eine Trennwand umfasst, die rechtwinklig an ihrer der anderen Seitenwand zugewandten Seite mit wenigstens einem Haken zur Montage einer lösbaren Halteklammer versehen ist, wobei die Halteklammer an einem Ende einen Schlitz zum Einstecken des Hakens aufweist.

38. Kabelkanal nach Anspruch 37,
**dadurch gekennzeichnet, dass** die Seitenwand und/oder die Trennwand des Sockels rechtwinklig an ihrer der anderen Seitenwand zugewandten Seite mit einer Vielzahl von Haken zur Montage einer Vielzahl von lösbaren Halteklammer versehen ist, wobei jede Halteklammer an einem Ende einen Schlitz zum Einstecken eines Hakens aufweist.

39. Kabelkanal nach einem der Ansprüche 37 oder 38,
**dadurch gekennzeichnet, dass** jede lösbare Halteklammer eine solche Länge aufweist, dass das dem Ende mit Schlitz entgegengesetzte Ende unter einer Umbiegung der anderen Seitenwand oder einer Trennwand ohne Haken des Sockels einzugreifen vermag.

40. Kabelkanal nach einem der Ansprüche 37 bis 39,
**dadurch gekennzeichnet, dass** die zwei Seitenwände rechtwinklig an ihrer der anderen Seitenwand zugewandten Seite mit einer Vielzahl von Haken zur Montage einer Vielzahl von lösbaren Halteklammern versehen ist, wobei jede Halteklammer an jedem ihrer entgegengesetzten Enden einen Schlitz zum Einstecken eines Hakens aufweist.

41. Kabelkanal nach einem der Ansprüche 38 bis 40,
**dadurch gekennzeichnet, dass** die Haken abwechselnd mit lösbaren Halteklammern angeordnet sind.

42. Kabelkanal nach einem der Ansprüche 38 bis 41,
**dadurch gekennzeichnet, dass** die Haken, mit denen eine Seitenwand und/oder eine Trennwand versehen ist, in derselben Richtung ausgerichtet sind.

43. Kabelkanal nach einem der Ansprüche 38 bis 41,
**dadurch gekennzeichnet, dass** die Haken, mit denen eine Seitenwand und/oder eine Trennwand versehen ist, abwechselnd in entgegengesetzten Richtungen ausgerichtet sind.

44. Kabelkanal nach einem der Ansprüche 37 bis 43,
**dadurch gekennzeichnet, dass** jede lösbare Halteklammer ein Schwenkmittel umfasst, das mit einem auf jedem Haken vorgesehenen komplementären Schwenkmittel zusammenzuwirken vermag, wenn die Halteklammer mit ihrem Schlitz auf den Haken gesteckt ist, um ein Schwenken der Halteklammer auf dem Haken zwischen einer ersten Stellung, in der die Halteklammer sich entlang einer Seitenwand oder einer Trennwand des Sockels erstreckt, und einer zweiten Stellung, in der die Halteklammer sich durch die Längsöffnung des Sockels oder einer Kammer von diesem hindurch erstreckt, zu ermöglichen.

45. Kabelkanal nach Anspruch 44,
**dadurch gekennzeichnet, dass** das auf jeder lösbaren Halteklammer vorgesehene Schwenkmittel ein Zapfen ist, und das auf jedem Haken vorgesehene komplementäre Schwenkmittel eine den Zapfen aufnehmende Vertiefung oder Öffnung ist.

46. Kabelkanal nach einem der Ansprüche 37 bis 45,
**dadurch gekennzeichnet, dass** jeder Haken einen Zahn zum Halten einer jeden mit ihrem Schlitz auf den Haken gesteckten Halteklammer umfasst.

47. Kabelkanal nach einem der Ansprüche 37 bis 46,
**dadurch gekennzeichnet, dass** jeder Haken mit der Seitenwand oder der Trennwand die mit diesem versehen ist, einstückig angeformt ist.

48. Kabelkanal nach einem der Ansprüche 37 bis 47,
**dadurch gekennzeichnet, dass** auf dem freien Endrand der Haken Mittel zur Montage eines Deckels zum Verschließen des Sockels vorgesehen sind.

49. Kabelkanal zum Führen elektrischer Kabel oder Leitungen, mit einem Sockel nach einem der Ansprüche 1 bis 30 und/oder einem Verschlusselement nach einem der Ansprüche 31 bis 34 und/oder einem Verkleidungselement nach einem der Ansprüche 35 oder 36.

## Claims

1. A base (10; 10') for trunking incorporating at least one detachable retaining clip (20; 20') for electric cables which is integrally formed with said base (10; 10'), **characterized in that** each retaining clip (20; 20') projects from a portion (11, 12; 17; 12') of said base (10; 10') for trunking while being attached to that portion (11, 12; 17; 12') by a frangible link (21).

2. A base (10; 10') according to claim 1, **characterized in that** each detachable retaining clip (20; 20') is located inside said base (10; 10').

3. A base (10; 10') according to one of claims 1 or 2, **characterized in that** each detachable retaining clip (20; 20') is attached to a lateral flange (12; 12') of the base (10; 10') and extends along the longitudinal axis (X) of said base (10; 10').

4. A base (10; 10') according to claim 3, **characterized in that** each detachable retaining clip (20; 20') is situated in the vicinity of an edge of a free end (14; 14') of that lateral flange (12; 12').

5. A base (10; 10') according to claim 4, **characterized in that** each detachable retaining clip (20; 20') is attached to a flange reentrant portion (15; 15') directed towards the other lateral flange (12; 12') of said base (10; 10').

6. A base (10; 10') according to one of claims 3 to 5, **characterized in that** a lateral flange (12; 12') carries, disposed at a right angle, on its inside face, a plurality of detachable retaining clips (20; 20') which extend along the longitudinal axis (X) of said base while being spaced apart from each other.

7. A base (10) according to claim 6, **characterized in that** the two lateral flange (12) of said base (10) carry, disposed at a right angle, on their inside faces, a plurality of detachable retaining clips (20) which extend along the longitudinal axis (X) of said base (10) while being spaced apart from each other.

8. A base (10; 10') according to one of claims 6 or 7, **characterized in that** said retaining clips (20; 20') are regularly spaced from each other.

9. A base (10) according to one of the preceding claims, **characterized in that** each detachable retaining clip (20) is attached to a partition (17) joined to the bottom (11) of the base (10) to form several compartments inside the latter.

10. A base (10) according to claim 9, **characterized in that** each detachable retaining clip (20) is positioned at a right angle on a face of said partition (17), in the vicinity of the free edge (18A) of said partition (17), and extends along the longitudinal (X) of said base.

11. A base (10) according to one of claims 9 or 10, **characterized in that** said partition (17) carries, disposed at a right angle, on one of its faces, a plurality of detachable retaining clips (20) which extend along the longitudinal axis (X) of said base (10) while being spaced apart from each other.

12. A base (10) according to one of claims 10 or 11, **characterized in that** said partition (17) carries, disposed at a right angle, on both of its faces, a plurality of detachable retaining clips which extend along the longitudinal axis of said base while being spaced apart from each other.

13. A base according to one of claims 10 to 12, **characterized in that** the partition is integrally formed with the base.

14. A base (10) according to one of claims 10 to 12, **characterized in that** the partition (17) is mounted on the bottom (11) of the base (10).

15. A base (10) according to one of the preceding claims, **characterized in that** a lateral flange (12) carries and/or a partition carries, disposed at a right angle, on its or their face that is turned towards the other lateral flange, at least one hook (30) for the mounting of said detachable retaining clip (20), said retaining clip (20) comprising at an end (20A) a slot (23) for the engagement of said hook (30).

16. A base (10) according to claim 15, **characterized in that** said lateral flange (12) carries and/or said partition (17) carries, disposed at a right angle, on its or their face that is turned towards the other lateral flange (12), a plurality of hooks (30) for the mounting of a plurality of detachable retaining clips (20), each retaining clip (20) comprising at an end (20A) a slot (23) for the engagement on a hook (30).

17. A base (10) according to one of claims 15 or 16, **characterized in that** each detachable retaining clip (20) presents a length such that the opposite end (20B) to that comprising said slot (23) is adapted to engage under a reentrant portion (15; 40) of the other lateral flange (12) or of a partition that does not have any hook.

18. A base (10) according to one of claims 15 or 16, **characterized in that** the two lateral flanges (12) carry, disposed at a right angle, on their face turned towards the other lateral flange, a plurality of hooks (30) for the mounting of a plurality of detachable retaining clips (20), each retaining clip (20) comprising, at each of its opposite ends (20A, 20B), a slot (23) for the engagement on a hook.

19. A base (10) according to one of claims 16 to 18, **characterized in that** said hooks (30) alternate with detachable retaining clips (20).

20. A base (10) according to one of claims 16 to 18, **characterized in that** the hooks (30) carried by a lateral flange (12) and/or a partition (17) are oriented in the same direction.

21. A base (10) according to one of claims 16 to 20, **characterized in that** the hooks (30) carried by a lateral flange (12) and/or a partition (17) are alternately oriented in opposite directions.

22. A base (10) according to one of claims 15 to 21, **characterized in that** each detachable retaining clip (20) comprises a means for pivoting (25) configured to cooperate with a complementary means for pivoting (34) provided on each hook (30) when the retaining clip (20) is inserted by its slot (23) onto said hook (30), to enable pivoting of the retaining clip (20) on said hook (30) between a first extreme position in which the retaining clip (20) extends along a lateral flange (12) or a partition (17) of said base (10) and a second extreme position in which the retaining clip (20) extends through the longitudinal opening of said base (10) or of a compartment thereof.

23. A base (10) according to claim 22, **characterized in that** said means for pivoting provided on each detachable retaining clip (20) is a nipple (25) and said complementary means for pivoting provided on each hook (30) is a recess (34) or a hole receiving said nipple (25).

24. A base (10) according to one of claims 15 to 23, **characterized in that** each hook (30) comprises a retaining tooth (32) for each retaining clip (20) engaged by its slot (23) on said hook (30).

25. A base (10) according to one of claims 15 to 24, **characterized in that** each hook (30) is integrally formed with the lateral flange (12) or the partition (17) which carries it.

26. A base (10) according to one of claims 18 to 25, **characterized in that** on the free end of the hooks (30), mounting means (14') are provided for mounting a cover for closing the base.

27. A base (10') according to one of claims 1 to 14, **characterized in that** it comprises a base (11') bordered by two different parallel lateral walls (12'), one being a lateral wall (12') carrying, disposed at a right angle, on its face turned towards the other lateral flange (12'), an inside reentrant portion (15') and a longitudinal groove (16') running under the inside reentrant portion (15'), which groove is bordered by a bead (17'), and the other being a lateral wall (12') carrying, disposed at a right angle, on its fact turned towards the other lateral flange (12'), a single inside reentrant portion (15") and **in that** each retaining clip (20') carries, at least at one end, two studs (21') projecting from a face of the retaining clip (20') that is turned inwardly of the base (10'), said bead (17') being adapted for the anchoring of the two studs (21') of each retaining clip (20') and said single inside reentrant portion (15") being adapted for the positioning and the support of the opposite end of each retaining clip (20') to that bearing said studs (21').

28. A base (10') according to claim 27, **characterized in that** each retaining clip (20') carries, at each of its two ends, two studs (21') projecting from the face of the retaining clip (20') that is turned inwardly of the base (10').

29. A base (10') according to one of claims 27 or 28, **characterized in that** each retaining clip (20') carries, on its face that is turned inwardly of the base (10'), six studs, one pair of studs being at each end and one pair of studs being situated in a medial portion.

30. A base (10') according to one of claims 27 to 29, **characterized in that** each retaining clip (20') carries, on its face that is turned inwardly of the base (10'), at least one longitudinal rib (22').

31. A closing member (50) to be mounted on a base for trunking (10) to close the longitudinal opening defined between its lateral flanges (12), **characterized in that** it incorporates at least one detachable retaining clip (20) for retaining electric cables which is integrally formed with said closing member (50) so as to project from a portion (51, 52) of the latter while being attached to that portion by a frangible connection (21).

32. A closing member (50) according to claim 31, **characterized in that** it comprises a plurality of detachable retaining clips spaced apart from each other in the longitudinal direction of said closing member.

33. A closing member (50) according to one of claims 31 or 32, **characterized in that** each retaining clip is attached to the inside face of the closing wall (52) of said closing member (50).

34. A closing member (50) according to one of claims 31 or 32, **characterized in that** each detachable retaining clip (20) is attached to an outside edge of the closing member (50).

35. A trim member to mount onto a base for trunking, **characterized in that** it incorporates at least one detachable retaining clip for retaining electric cables which is integrally formed with said trim member so as to project from a portion of the latter while being attached to that portion by a frangible connection.

36. A trim member according to claim 35, **characterized in that** it comprises a plurality of detachable retaining clips spaced apart from each other in the longitudinal direction of said trim member.

37. Trunking for electric conductors or cables comprising a base, a closing member (50) according to one of claims 31 to 34 and/or a trim member according to claim 35 or 36, said base comprising a lateral flange which carries and/or a partition which carries, disposed at a right angle, on its or their face that is turned towards the other lateral flange, at least one hook for the mounting of said detachable retaining clip, said retaining clip comprising at an end a slot for the engagement of said hook.

38. Cable trunking according to claim 37, **characterized in that** said lateral flange carries and/or said partition of said base carries, disposed at a right angle, on its or their face that is turned towards the other lateral flange, a plurality of hooks for the mounting of a plurality of detachable retaining clips, each retaining clip comprising at an end a slot for the engagement on a hook.

39. Cable trunking according to one of claims 37 or 38, **characterized in that** each detachable retaining clip presents a length such that the opposite end to that comprising said slot is configured to engage under a reentrant portion of the other lateral flange or of a partition that does not have any hook of said base.

40. Cable trunking according to one of claims 37 to 39, **characterized in that** the two lateral flanges carry, disposed at a right angle, on their face turned towards the other lateral flange, a plurality of hooks for the mounting of a plurality of detachable retaining clips, each retaining clip comprising, at each of its opposite ends, a slot for the engagement on a hook.

41. Cable trunking according to one of claims 38 to 40, **characterized in that** said hooks alternate with detachable retaining clips.

42. Cable trunking according to one of claims 38 to 41, **characterized in that** the hooks carried by a lateral flange and/or a partition are oriented in the same direction.

43. Cable trunking according to one of claims 38 to 41, **characterized in that** the hooks carried by a lateral flange and/or a partition are alternately oriented in opposite directions.

44. Cable trunking according to one of claims 37 to 43, **characterized in that** each detachable retaining clip comprises a means for pivoting configured to cooperate with a complementary means for pivoting provided on each hook when the retaining clip is inserted by its slot onto said hook, to enable pivoting of the retaining clip on said hook between a first position in which the retaining clip extends along a lateral flange or a partition of said base and a second position in which the retaining clip extends through the longitudinal opening of said base or of a compartment thereof.

45. Cable trunking according to claim 44, **characterized in that** said means for pivoting provided on each detachable retaining clip is a nipple and said complementary means for pivoting provided on each hook is a recess or a hole receiving said nipple.

46. Cable trunking according to one of claims 37 to 45, **characterized in that** each hook comprises a retaining tooth for each retaining clip engaged by its slot on said hook.

47. Cable trunking according to one of claims 37 to 46, **characterized in that** each hook is integrally formed with the lateral flange or the partition which carries it.

48. Cable trunking according to one of claims 37 to 47, **characterized in that** on the free end of the hooks, mounting means are provided for mounting a cover for closing the base.

49. Trunking for electric conductors or cables which comprises a base according to one of claims 1 to 30 and/or a closing member according to one of claims 31 to 34 and/or a trim member according to one of claim 35 or 36.
